# EUROPEAN PATENT APPLICATION

(11) **EP 4 190 757 A1**
(43) Date of publication of application: **07.06.2023**
(21) Application number: 21850844.8
(22) Date of filing: 26.07.2021
(51) Int. Cl.: C03C 27/12, B32B 1/04, B32B 27/08, B32B 27/22, B60J 1/00

(54) **INTERMEDIATE FILM FOR LAMINATED GLASS AND LAMINATED GLASS**

(30) Priority: 31.07.2020 JP 2020130796
(71) Applicant: SEKISUI CHEMICAL CO., LTD., Osaka-shi Osaka 530-8565 (JP)
(72) Inventor: ISHIDA, Jun, Kouka-shi, Shiga 528-8585 (JP); NISHINO, Hiromitsu, Kouka-shi, Shiga 528-8585 (JP); IWAMOTO, Tatsuya, Saitama-shi, Saitama 338-0837 (JP)
(74) Representative: Ter Meer Steinmeister & Partner
(86) International application number: PCT/JP2021/027511
(87) International publication number: WO 2022/024981

(57) **Abstract**

Provided is an interlayer film for laminated glass capable of enhancing the sound insulating property in a low-frequency region while keeping the sound insulating property in a high-frequency region high. An interlayer film for laminated glass according to the present invention is an interlayer film for laminated glass having a two or more-layer structure, the interlayer film has one end, and the other end being at an opposite side of the one end, each layer contained in the interlayer film has one end, and the other end being at an opposite side of the one end, the one end of the each layer is located at the one end side of the interlayer film in a direction connecting the one end and the other end of the interlayer film, the other end of the each layer is located at the other end side of the interlayer film in the direction connecting the one end and the other end of the interlayer film, in the interlayer film, a thickness of the other end is larger than a thickness of the one end, and in at least one layer contained in the interlayer film, a thickness at the other end is smaller than a thickness at the one end.

## Description

### TECHNICAL FIELD

The present invention relates to an interlayer film for laminated glass that is used for obtaining laminated glass. Moreover, the present invention relates to a laminated glass prepared with the interlayer film for laminated glass.

### BACKGROUND ART

Since laminated glass generates only a small amount of scattering glass fragments even when subjected to external impact and broken, laminated glass is excellent in safety. As such, laminated glass is widely used for automobiles, railway vehicles, aircraft, ships, buildings and the like. Laminated glass is produced by sandwiching an interlayer film between a pair of glass plates.

Moreover, as a laminated glass used in automobiles, a head-up display (HUD) has been known. In a HUD, it is possible to display measured information including automobile traveling data such as speed on the windshield of the automobile, and the driver can recognize as if the display were shown in front of the windshield.

In the HUD, there is a problem that the measured information or the like is doubly observed.

In order to suppress double images, a wedge-like interlayer film in which the thickness of the one end is smaller than the thickness of the other end is used (for example, Patent Document 1).

### Related Art Document

### Patent Document

Patent Document 1: WO2018/070461A1

### SUMMARY OF THE INVENTION

### PROBLEMS TO BE SOLVED BY THE INVENTION

When laminated glass including a conventional wedge-like interlayer film is used in an automobile or the like, the sound insulating property in a high-frequency region of about 4000 Hz to 5000 Hz such as wind noise can be enhanced.

In a conventional wedge-like interlayer film, however, the difficulty in adjusting the natural frequency can make it difficult to enhance the sound insulating property in a low-frequency region while keeping the sound insulating property in a high-frequency region high. For example, in a conventional wedge-like interlayer film, it is sometimes difficult to enhance the sound insulating property in a low-frequency region such as booming noise while keeping the sound insulating property in a high-frequency region such as wind noise high.

It is an object of the present invention to provide an interlayer film for laminated glass capable of enhancing the sound insulating property in a low-frequency region while keeping the sound insulating property in a high-frequency region high. It is also an object of the present invention to provide a laminated glass prepared with the interlayer film for laminated glass.

### MEANS FOR SOLVING THE PROBLEMS

According to a broad aspect of the present invention, there is provided an interlayer film for laminated glass (in the present specification, "interlayer film for laminated glass" is sometimes abbreviated as "interlayer film") having a two or more-layer structure, the interlayer film having one end, and the other end being at an opposite side of the one end, each layer contained in the interlayer film having one end, and the other end being at an opposite side of the one end, the one end of the each layer being located at the one end side of the interlayer film in a direction connecting the one end and the other end of the interlayer film, the other end of the each layer being located at the other end side of the interlayer film in the direction connecting the one end and the other end of the interlayer film, in the interlayer film, a thickness of the other end being larger than a thickness of the one end, and in at least one layer contained in the interlayer film, a thickness at the other end being smaller than a thickness at the one end.

In a specific aspect of the interlayer film according to the present invention, the interlayer film is an interlayer film for laminated glass having a three or more-layer structure, and includes a first layer, a second layer, and a third layer, and the first layer is arranged on a first surface side of the second layer, and the third layer is arranged on a second surface side opposite to the first surface of the second layer.

In a specific aspect of the interlayer film according to the present invention, a thickness at the other end is smaller than a thickness at the one end in the first layer.

In a specific aspect of the interlayer film according to the present invention, a thickness at the other end is larger than a thickness at the one end in the third layer.

In a specific aspect of the interlayer film according to the present invention, a ratio of an average thickness of the first layer to an average thickness of the interlayer film is smaller than a ratio of an average thickness of the third layer to an average thickness of the interlayer film, and a ten-point average roughness Rz of a surface on a side opposite to the second layer of the first layer is 9 um or more.

In a specific aspect of the interlayer film according to the present invention, a thickness at the other end is smaller than a thickness at the one end in the third layer.

In a specific aspect of the interlayer film according to the present invention, a ratio of an average thickness of the third layer to an average thickness of the interlayer film is smaller than a ratio of an average thickness of the first layer to an average thickness of the interlayer film, and a ten-point average roughness Rz of a surface on a side opposite to the second layer of the third layer is 9 um or more.

In a specific aspect of the interlayer film according to the present invention, the first layer contains a thermoplastic resin and a plasticizer, the second layer contains a thermoplastic resin and a plasticizer, and the third layer contains a thermoplastic resin and a plasticizer.

In a specific aspect of the interlayer film according to the present invention, a content of the plasticizer in the second layer per 100 parts by weight of the thermoplastic resin in the second layer is larger than a content of the plasticizer in the first layer per 100 parts by weight of the thermoplastic resin in the first layer, and a content of the plasticizer in the second layer per 100 parts by weight of the thermoplastic resin in the second layer is larger than a content of the plasticizer in the third layer per 100 parts by weight of the thermoplastic resin in the third layer.

In a specific aspect of the interlayer film according to the present invention, a thickness at the one end is 300 um or more in the interlayer film.

According to a broad aspect of the present invention, there is provided a laminated glass including a first lamination glass member, a second lamination glass member, and the interlayer film for laminated glass described above, the interlayer film for laminated glass being arranged between the first lamination glass member and the second lamination glass member.

### EFFECT OF THE INVENTION

The interlayer film according to the present invention has two or more-layer structure. The interlayer film according to the present invention has one end and the other end being at the opposite side of the one end. Each layer contained in the interlayer film according to the present invention has one end and the other end being at the opposite side of the one end. In the interlayer film according to the present invention, the one end of the each layer is located at the one end side of the interlayer film in the direction connecting the one end and the other end of the interlayer film, and the other end of the each layer is located at the other end side of the interlayer film in the direction connecting the one end and the other end of the interlayer film. In the interlayer film according to the present invention, the thickness of the other end is larger than the thickness of the one end. In at least one layer contained in the interlayer film according to the present invention, the thickness at the other end is smaller than the thickness at the one end. In the interlayer film for laminated glass according to the present invention, since the above configuration is provided, it is possible to enhance the sound insulating property in a low-frequency region while keeping the sound insulating property in a high-frequency region high.

### BRIEF DESCRIPTION OF DRAWINGS

[Fig. 1] Fig. 1 is a sectional view schematically showing an interlayer film for laminated glass in accordance with a first embodiment of the present invention.
[Fig. 2] Fig. 2 is a sectional view schematically showing an interlayer film for laminated glass in accordance with a second embodiment of the present invention.
[Fig. 3] Fig. 3 is a sectional view schematically showing an interlayer film for laminated glass in accordance with a third embodiment of the present invention.
[Fig. 4] Fig. 4 is a sectional view schematically showing an interlayer film for laminated glass in accordance with a fourth embodiment of the present invention.
[Fig. 5] Fig. 5 is a sectional view schematically showing an interlayer film for laminated glass in accordance with a fifth embodiment of the present invention.
[Fig. 6] Fig. 6 is a sectional view schematically showing an interlayer film for laminated glass in accordance with a sixth embodiment of the present invention.
[Fig. 7] Fig. 7 is a sectional view schematically showing an example of laminated glass prepared with the interlayer film for laminated glass shown in Fig. 1.
[Fig. 8] Fig. 8 is a plan view schematically showing an optical strain inspection apparatus used for measurement of optical strain in Examples and Comparative Examples.
[Fig. 9] Fig. 9 is a front view schematically showing an optical strain inspection apparatus used for measurement of optical strain in Examples and Comparative Examples.
[Fig. 10] Figs. 10(a) and (b) are views for illustrating a processing operation in an image processing part.

### MODES FOR CARRYING OUT THE INVENTION

Hereinafter, the details of the present invention will be described.

The interlayer film for laminated glass (in the present specification, sometimes abbreviated as "interlayer film") according to the present invention is used for laminated glass.

The interlayer film has a two or more-layer structure. Therefore, the interlayer film includes at least a first layer, and a second layer. In the interlayer film, the first layer is disposed on a first surface side of the second layer.

The interlayer film may have a three-layer structure, may have a three or more-layer structure, may have a four or more-layer structure, may have a five or more-layer structure, and may have a six or more-layer structure. The interlayer film having a three or more-layer structure includes at least a first layer, a second layer, and a third layer. In the interlayer film having a three or more-layer structure, the first layer is arranged on a first surface side of the second layer, and the third layer is arranged on a second surface side opposite to the first surface of the second layer. In the interlayer film having a three or more-layer structure, the first layer, the second layer and the third layer are arranged in line in the thickness direction of the interlayer film in this order.

The structure of the interlayer film may partially vary. For example, the interlayer film according to the present invention may have a part having a one-layer structure, and a part having a two or more-layer structure. In the present invention, when the interlayer film has a part having a two or more-layer structure, the interlayer film is regarded as having the two or more-layer structure. The interlayer film according to the present invention may have a part having a one-layer structure, and a part having a three or more-layer structure. The interlayer film according to the present invention may have a part having a two-layer structure, and a part having a three or more-layer structure. In the present invention, when the interlayer film has a part having a three or more-layer structure, the interlayer film is regarded as having the three or more-layer structure.

The interlayer film has one end and the other end being at an opposite side of the one end. The one end and the other end of an interlayer film are end parts of both sides facing each other in the interlayer film.

Each layer contained in the interlayer film has one end and the other end being at the opposite side of the one end. The one end and the other end of each layer are end parts of both sides facing each other in each layer. The one end of the each layer is located at the one end side of the interlayer film in the direction connecting the one end and the other end of the interlayer film, and the other end of the each layer is located at the other end side of the interlayer film in the direction connecting the one end and the other end of the interlayer film.

In the present invention, the thickness of the other end is larger than the thickness of the one end in the interlayer film.

In the present invention, the thickness at the other end is smaller than the thickness at the one end in at least one layer contained in the interlayer film. That is, in the interlayer film, in at least one layer, the thickness at the other end of the layer is smaller than the thickness at the one end of the layer. The interlayer film has at least one layer in which the thickness at the other end is smaller than the thickness at the one end.

In the interlayer film according to the present invention, since the above configuration is provided, it is possible to enhance the sound insulating property in a low-frequency region while keeping the sound insulating property in a high-frequency region high.

In the interlayer film according to the present invention, it is possible to easily adjust the natural frequency, for example, by controlling a thickness ratio or the like of each layer contained in the interlayer film. Accordingly, it is possible to enhance the sound insulating property in a low-frequency region such as booming noise while keeping the sound insulating property in a high-frequency region such as wind noise high.

Furthermore, in the interlayer film according to the present invention, it is possible to prevent generation of optical strain, for example, by adjusting the shape of each layer.

Hereinafter, specific embodiments of the present invention will be described with reference to the drawings.

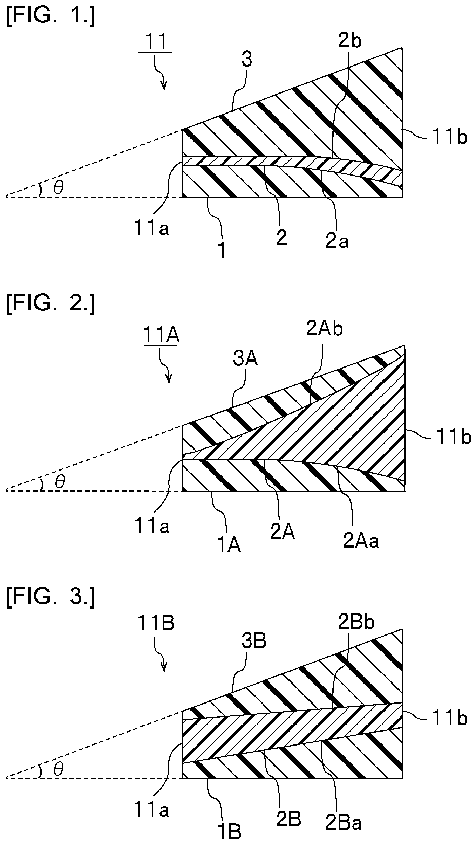

Fig. 1 is a sectional view schematically showing an interlayer film for laminated glass in accordance with a first embodiment of the present invention.

An interlayer film 11 shown in Fig. 1 is used for obtaining laminated glass. The interlayer film 11 is an interlayer film for laminated glass.

The interlayer film 11 has one end 11a, and the other end 11b. In the interlayer film 11, the thickness of the other end 11b is larger than the thickness of the one end 11a. In the interlayer film 11, the increment in thickness is constant from the one end 11a side to the other end 11b side.

The interlayer film 11 includes a first layer 1, a second layer 2, and a third layer 3. The interlayer film 11 has a three-layer structure. The second layer 2 has a first surface 2a and a second surface 2b. The first surface 2a and the second surface 2b are surfaces facing to each other. The first layer 1 is arranged on the first surface 2a side of the second layer 2 to be layered thereon. The third layer 3 is arranged on the second surface 2b side of the second layer 2 to be layered thereon. The first layer 1 and the second layer 2 are in contact with each other. The second layer 2 and the third layer 3 are in contact with each other. The second layer 2 is arranged between the first layer 1 and the third layer 3 to be sandwiched therebetween. Each of the first layer 1, the second layer 2 and the third layer 3 has one end and the other end. The one end in these layers is located at the one end 11a side of the interlayer film 11 in the direction connecting the one end 11a and the other end 11b of the interlayer film 11. The other end in these layers is located at the other end 11b side of the interlayer film 11 in the direction connecting the one end 11a and the other end 11b of the interlayer film 11. The one end in each of the first layer 1, the second layer 2 and the third layer 3 corresponds to the one end 11a of the interlayer film 11. The other end in each of the first layer 1, the second layer 2 and the third layer 3 corresponds to the other end 11b of the interlayer film 11. An end surface at the one end 11a side of the interlayer film 11 is made up of end surfaces at the one end side in the first layer 1, the second layer 2 and the third layer 3. An end surface at the other end 11b side of the interlayer film 11 is made up of end surfaces at the other end side in the first layer 1, the second layer 2 and the third layer 3.

In the first layer 1, the thickness at the other end of the first layer 1 is smaller than the thickness at the one end of the first layer 1. The sectional shape in the thickness direction of the first layer 1 has a rectangular portion, and a wedge-like portion. The sectional shape in the thickness direction of the first layer 1 has a rectangular portion at the one end 11a side, and a wedge-like portion at the other end 11b side. The first layer 1 has a region where the thickness decreases from the one end side to the other end side. The first layer 1 has a portion where the decrement in thickness increases in the region where the thickness decreases from the one end side to the other end side.

In the second layer 2, the thickness at the other end of the second layer 2 is larger than the thickness at the one end of the second layer 2. The sectional shape in the thickness direction of the second layer 2 has a rectangular portion and a wedge-like portion. The sectional shape in the thickness direction of the second layer 2 has a rectangular portion at the one end side, and a wedge-like portion at the other end side. The second layer 2 has a region where the thickness increases from the one end side to the other end side.

In the third layer 3, the thickness at the other end of the third layer 3 is larger than the thickness at the one end of the third layer 3. In the third layer 3, the thickness increases from the one end side to the other end side. The third layer 3 has a portion where the increment in thickness increases in the region where the thickness increases from the one end side to the other end side.

Fig. 2 is a sectional view schematically showing an interlayer film for laminated glass in accordance with a second embodiment of the present invention.

An interlayer film 11A shown in Fig. 2 is used for obtaining laminated glass. The interlayer film 11A is an interlayer film for laminated glass.

The interlayer film 11A has one end 11a, and the other end 11b. In the interlayer film 11A, the thickness of the other end 11b is larger than the thickness of the one end 11a. In the interlayer film 11A, the increment in thickness is constant from the one end 11a side to the other end 11b side.

The interlayer film 11A includes a first layer 1A, a second layer 2A, and a third layer 3A. The interlayer film 11A has a three-layer structure. The second layer 2A has a first surface 2Aa and a second surface 2Ab. The first surface 2Aa and the second surface 2Ab are surfaces facing to each other. The first layer 1A is arranged on the first surface 2Aa side of the second layer 2A to be layered thereon. The third layer 3A is arranged on the second surface 2Ab side of the second layer 2A to be layered thereon. The first layer 1A and the second layer 2A are in contact with each other. The second layer 2A and the third layer 3A are in contact with each other. The second layer 2A is arranged between the first layer 1A and the third layer 3A to be sandwiched therebetween. Each of the first layer 1A, the second layer 2A and the third layer 3A has one end and the other end. The one end in these layers is located at the one end 11a side of the interlayer film 11A in the direction connecting the one end 11a and the other end 11b of the interlayer film 11A. The other end in these layers is located at the other end 11b side of the interlayer film 11A in the direction connecting the one end 11a and the other end 11b of the interlayer film 11A. The one end in each of the first layer 1A, the second layer 2A and the third layer 3A corresponds to the one end 11a of the interlayer film 11A. The other end in each of the first layer 1A, the second layer 2A and the third layer 3A corresponds to the other end 11b of the interlayer film 11A. An end surface at the one end 11a side of the interlayer film 11A is made up of end surfaces at the one end side in the first layer 1A, the second layer 2A and the third layer 3A. An end surface at the other end 11b side of the interlayer film 11A is made up of end surfaces at the other end side in the first layer 1A, the second layer 2A and the third layer 3A.

In the first layer 1A, the thickness at the other end of the first layer 1A is smaller than the thickness at the one end of the first layer 1A. The sectional shape in the thickness direction of the first layer 1A has a rectangular portion and a wedge-like portion. The sectional shape in the thickness direction of the first layer 1A has a rectangular portion at the one end side, and a wedge-like portion at the other end side. The first layer 1A has a region where the thickness decreases from the one end side to the other end side. The first layer 1A has a portion where the decrement in thickness increases in the region where the thickness decreases from the one end side to the other end side.

In the second layer 2A, the thickness at the other end of the second layer 2A is larger than the thickness at the one end of the second layer 2A. In the second layer 2A, the thickness increases from the one end side to the other end side. The second layer 2A has a portion where the increment in thickness increases in the region where the thickness increases from the one end side to the other end side.

In the third layer 3A, the thickness at the other end of the third layer 3A is smaller than the thickness at the one end of the third layer 3A. In the third layer 3A, the thickness decreases from the one end side to the other end side. The third layer 3A has a portion where the decrement in thickness increases in the region where the thickness decreases from the one end side to the other end side.

Fig. 3 is a sectional view schematically showing an interlayer film for laminated glass in accordance with a third embodiment of the present invention.

An interlayer film 11B shown in Fig. 3 is used for obtaining laminated glass. The interlayer film 11B is an interlayer film for laminated glass.

The interlayer film 11B has one end 11a, and the other end 11b. In the interlayer film 11B, the thickness of the other end 11b is larger than the thickness of the one end 11a. In the interlayer film 11B, the increment in thickness is constant from the one end 11a side to the other end 11b side.

The interlayer film 11B includes a first layer 1B, a second layer 2B, and a third layer 3B. The interlayer film 11B has a three-layer structure. The second layer 2B has a first surface 2Ba and a second surface 2Bb. The first surface 2Ba and the second surface 2Bb are surfaces facing to each other. The first layer 1B is arranged on the first surface 2Ba side of the second layer 2B to be layered thereon. The third layer 3B is arranged on the second surface 2Bb side of the second layer 2B to be layered thereon. The first layer 1B and the second layer 2B are in contact with each other. The second layer 2B and the third layer 3B are in contact with each other. The second layer 2B is arranged between the first layer 1B and the third layer 3B to be sandwiched therebetween. Each of the first layer 1B, the second layer 2B and the third layer 3B has one end and the other end. The one end in these layers is located at the one end 11a side of the interlayer film 11B in the direction connecting the one end 11a and the other end 11b of the interlayer film 11B. The other end in these layers is located at the other end 11b side of the interlayer film 11B in the direction connecting the one end 11a and the other end 11b of the interlayer film 11B. The one end in each of the first layer 1B, the second layer 2B and the third layer 3B corresponds to the one end 11a of the interlayer film 11B. The other end in each of the first layer 1B, the second layer 2B and the third layer 3B corresponds to the other end 11b of the interlayer film 11B. An end surface at the one end 11a side of the interlayer film 11B is made up of end surfaces at the one end side in the first layer 1B, the second layer 2B and the third layer 3B. An end surface at the other end 11b side of the interlayer film 11B is made up of end surfaces at the other end side in the first layer 1B, the second layer 2B and the third layer 3B.

In the first layer 1B, the thickness at the other end of the first layer 1B is larger than the thickness at the one end of the first layer 1B. In the first layer 1B, the thickness increases from the one end side to the other end side. In the first layer 1B, the increment in thickness is constant from the one end side to the other end side.

In the second layer 2B, the thickness at the other end of the second layer 2B is smaller than the thickness at the one end of the second layer 2B. In the second layer 2B, the thickness decreases from the one end side to the other end side. In the second layer 2B, the decrement in thickness is constant from the one end side to the other end side.

In the third layer 3B, the thickness at the other end of the third layer 3B is larger than the thickness at the one end of the third layer 3B. In the third layer 3B, the thickness increases from the one end side to the other end side. In the third layer 3B, the increment in thickness is constant from the one end side to the other end side.

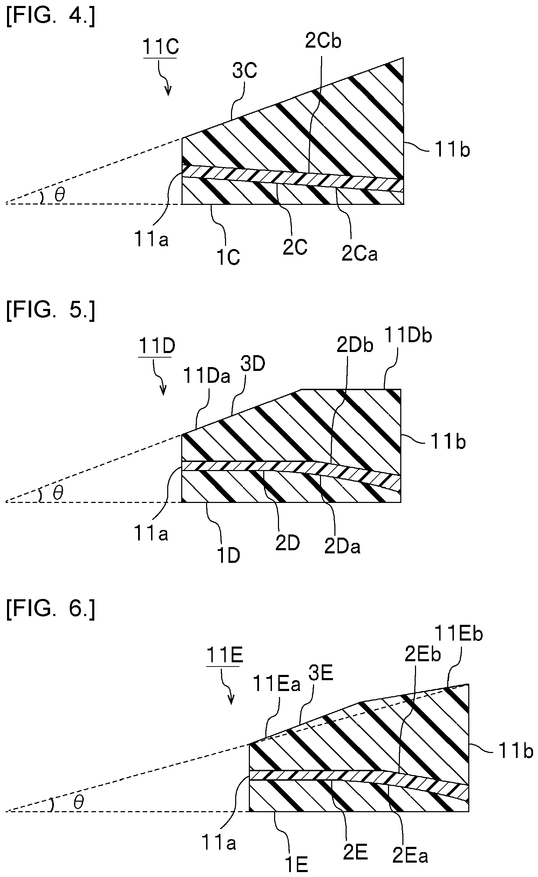

Fig. 4 is a sectional view schematically showing an interlayer film for laminated glass in accordance with a fourth embodiment of the present invention.

An interlayer film 11C shown in Fig. 4 is used for obtaining laminated glass. The interlayer film 11C is an interlayer film for laminated glass.

The interlayer film 11C has one end 11a, and the other end 11b. In the interlayer film 11C, the thickness of the other end 11b is larger than the thickness of the one end 11a. In the interlayer film 11C, the increment in thickness is constant from the one end 11a side to the other end 11b side.

The interlayer film 11C includes a first layer 1C, a second layer 2C, and a third layer 3C. The interlayer film 11C has a three-layer structure. The second layer 2C has a first surface 2Ca and a second surface 2Cb. The first surface 2Ca and the second surface 2Cb are surfaces facing to each other. The first layer 1C is arranged on the first surface 2Ca side of the second layer 2C to be layered thereon. The third layer 3C is arranged on the second surface 2Cb side of the second layer 2C to be layered thereon. The first layer 1C and the second layer 2C are in contact with each other. The second layer 2C and the third layer 3C are in contact with each other. The second layer 2C is arranged between the first layer 1C and the third layer 3C to be sandwiched therebetween. Each of the first layer 1C, the second layer 2C and the third layer 3C has one end and the other end. The one end in these layers is located at the one end 11a side of the interlayer film 11C in the direction connecting the one end 11a and the other end 11b of the interlayer film 11C. The other end in these layers is located at the other end 11b side of the interlayer film 11C in the direction connecting the one end 11a and the other end 11b of the interlayer film 11C. The one end in each of the first layer 1C, the second layer 2C and the third layer 3C corresponds to the one end 11a of the interlayer film 11C. The other end in each of the first layer 1C, the second layer 2C and the third layer 3C corresponds to the other end 11b of the interlayer film 11C. An end surface at the one end 11a side of the interlayer film 11C is made up of end surfaces at the one end side in the first layer 1C, the second layer 2C and the third layer 3C. An end surface at the other end 11b side of the interlayer film 11C is made up of end surfaces at the other end side in the first layer 1C, the second layer 2C and the third layer 3C.

In the first layer 1C, the thickness at the other end of the first layer 1C is smaller than the thickness at the one end of the first layer 1C. In the first layer 1C, the thickness decreases from the one end side to the other end side. In the first layer 1C, the decrement in thickness is constant from the one end side to the other end side.

In the second layer 2C, the thickness at the other end of the second layer 2C is the same as the thickness at the one end of the second layer 2C. In the second layer 2C, the thickness is uniform from the one end side to the other end side.

In the third layer 3C, the thickness at the other end of the third layer 3C is larger than the thickness at the one end of the third layer 3C. In the third layer 3C, the thickness increases from the one end side to the other end side. In the third layer 3C, the increment in thickness is constant from the one end side to the other end side.

Fig. 5 is a sectional view schematically showing an interlayer film for laminated glass in accordance with a fifth embodiment of the present invention.

An interlayer film 11D shown in Fig. 5 is used for obtaining laminated glass. The interlayer film 11D is an interlayer film for laminated glass.

The interlayer film 11D has one end 11a, and the other end 11b. In the interlayer film 11D, the thickness of the other end 11b is larger than the thickness of the one end 11a. A sectional shape in the thickness direction of the interlayer film 11D includes a wedge-like portion 11Da and a rectangular portion 11Db. The interlayer film 11D has the wedge-like portion 11Da at the one end 11a side and the rectangular portion 11Db at the other end 11b side. In the portion 11Da where the sectional shape in the thickness direction of the interlayer film 11D is a wedge-like shape, the increment in thickness is constant from the one end 11a side to the other end 11b side.

The interlayer film 11D includes a first layer 1D, a second layer 2D, and a third layer 3D. The first layer 1D is arranged on a first surface 2Da side of the second layer 2D to be layered thereon. The third layer 3D is arranged on a second surface 2Db side of the second layer 2D to be layered thereon. Each of the first layer 1D, the second layer 2D and the third layer 3D has one end and the other end. The one end in these layers is located at the one end 11a side of the interlayer film 11D in the direction connecting the one end 11a and the other end 11b of the interlayer film 11D. The other end in these layers is located at the other end 11b side of the interlayer film 11D in the direction connecting the one end 11a and the other end 11b of the interlayer film 11D. The one end in each of the first layer 1D, the second layer 2D and the third layer 3D corresponds to the one end 11a of the interlayer film 11D. The other end in each of the first layer 1D, the second layer 2D and the third layer 3D corresponds to the other end 11b of the interlayer film 11D. An end surface at the one end 11a side of the interlayer film 11D is made up of end surfaces at the one end side in the first layer 1D, the second layer 2D and the third layer 3D. An end surface at the other end 11b side of the interlayer film 11D is made up of end surfaces at the other end side in the first layer 1D, the second layer 2D and the third layer 3D.

In the first layer 1D, the thickness at the other end of the first layer 1D is smaller than the thickness at the one end of the first layer 1D. The sectional shape in the thickness direction of the first layer 1D has a rectangular portion and a wedge-like portion. The sectional shape in the thickness direction of the first layer 1D has a rectangular portion at the one end side, and a wedge-like portion at the other end side. The first layer 1D has a region where the thickness decreases from the one end side to the other end side. The first layer 1D has a portion where the decrement in thickness increases in the region where the thickness decreases from the one end side to the other end side.

In the second layer 2D, the thickness at the other end of the second layer 2D is larger than the thickness at the one end of the second layer 2D. The sectional shape in the thickness direction of the second layer 2D has a rectangular portion and a wedge-like portion. The sectional shape in the thickness direction of the second layer 2D has a rectangular portion at the one end side, and a wedge-like portion at the other end side. The second layer 2D has a region where the thickness increases from the one end side to the other end side.

In the third layer 3D, the thickness at the other end of the third layer 3D is larger than the thickness at the one end of the third layer 3D. The sectional shape in the thickness direction of the third layer 3D has a wedge-like portion. The third layer 3D has a region where the thickness increases from the one end side to the other end side. The third layer 3D has a portion where the increment in thickness increases in the region where the thickness increases from the one end side to the other end side.

Fig. 6 is a sectional view schematically showing an interlayer film for laminated glass in accordance with a sixth embodiment of the present invention.

An interlayer film 11E shown in Fig. 6 is used for obtaining laminated glass. The interlayer film 11E is an interlayer film for laminated glass.

The interlayer film 11E has one end 11a, and the other end 11b. In the interlayer film 11E, the thickness of the other end 11b is larger than the thickness of the one end 11a. The interlayer film 11E has a region where the thickness increases from the one end 11a side to the other end 11b side. The interlayer film 11E has a first portion 11Ea where the increment in thickness is constant, and a second portion 11Eb where the increment in thickness is constant, in the region where the thickness increases. The increment in thickness in the first portion 11Ea and the increment in thickness in the second portion 11Eb are different from each other. The increment in thickness in the first portion 11Ea is larger than the increment in thickness in the second portion 11Eb.

The interlayer film 11E includes a first layer 1E, a second layer 2E, and a third layer 3E. The first layer 1E is arranged on a first surface 2Ea side of the second layer 2E to be layered thereon. The third layer 3E is arranged on a second surface 2Eb side of the second layer 2E to be layered thereon. Each of the first layer 1E, the second layer 2E and the third layer 3E has one end and the other end. The one end in these layers is located at the one end 11a side of the interlayer film 11E in the direction connecting the one end 11a and the other end 11b of the interlayer film 11E. The other end in these layers is located at the other end 11b side of the interlayer film 11E in the direction connecting the one end 11a and the other end 11b of the interlayer film 11E. The one end in each of the first layer 1E, the second layer 2E and the third layer 3E corresponds to the one end 11a of the interlayer film 11E. The other end in each of the first layer 1E, the second layer 2E and the third layer 3E corresponds to the other end 11b of the interlayer film 11E. An end surface at the one end 11a side of the interlayer film 11E is made up of end surfaces at the one end side in the first layer 1E, the second layer 2E and the third layer 3E. An end surface at the other end 11b side of the interlayer film 11E is made up of end surfaces at the other end side in the first layer 1E, the second layer 2E and the third layer 3E.

In the first layer 1E, the thickness at the other end of the first layer 1E is smaller than the thickness at the one end of the first layer 1E. The sectional shape in the thickness direction of the first layer 1E has a rectangular portion and a wedge-like portion. The sectional shape in the thickness direction of the first layer 1E has a rectangular portion at the one end side, and a wedge-like portion at the other end side. The first layer 1E has a region where the thickness decreases from the one end side to the other end side. The first layer 1E has a portion where the decrement in thickness increases in the region where the thickness decreases from the one end side to the other end side.

In the second layer 2E, the thickness at the other end of the second layer 2E is larger than the thickness at the one end of the second layer 2E. The sectional shape in the thickness direction of the second layer 2E has a rectangular portion and a wedge-like portion. The sectional shape in the thickness direction of the second layer 2E has a rectangular portion at the one end side, and a wedge-like portion at the other end side. The second layer 2E has a region where the thickness increases from the one end side to the other end side.

In the third layer 3E, the thickness at the other end of the third layer 3E is larger than the thickness at the one end of the third layer 3E. The sectional shape in the thickness direction of the third layer 3E has a wedge-like portion. The third layer 3E has a region where the thickness increases from the one end side to the other end side. The third layer 3E has a portion where the increment in thickness increases in the region where the thickness increases from the one end side to the other end side.

In the interlayer film according to the present invention, other layer may be arranged between the first layer and the second layer, and between the second layer and the third layer. It is preferred that the first layer and the second layer be directly layered, and it is preferred that the second layer and the third layer be directly layered.

It is preferred that the first layer be a surface layer of the interlayer film. It is preferred that the third layer be a surface layer of the interlayer film. When the interlayer film has a three or more-layer structure, the second layer is an intermediate layer of the interlayer film.

In the interlayer film according to the present invention, the thickness at the other end is smaller than the thickness at the one end in at least one layer. In the interlayer film according to the present invention, the thickness at the other end may be smaller than the thickness at the one end in one layer, and the thickness at the other end may be smaller than the thickness at the one end in two layers. When the interlayer film according to the present invention has a four or more-layer structure, the thickness at the other end may be smaller than the thickness at the one end in three or more layers in the interlayer film. The layer in which the thickness at the other end is smaller than the thickness at the one end may be the first layer, may be the second layer, and may be the third layer.

In the interlayer film according to the present invention, the thickness of the other end is larger than the thickness of the one end, and, in at least one layer contained in the interlayer film according to the present invention, the thickness at the other end is smaller than the thickness at the one end. Therefore, in the interlayer film according to the present invention, the thickness at the other end is larger than the thickness at the one end in at least one layer. In the interlayer film according to the present invention, the thickness at the other end may be larger than the thickness at the one end in one layer, and the thickness at the other end may be larger than the thickness at the one end in two layers. When the interlayer film according to the present invention has a four or more-layer structure, the thickness at the other end may be larger than the thickness at the one end in three or more layers in the interlayer film. The layer in which the thickness at the other end is larger than the thickness at the one end may be the first layer, may be the second layer, and may be the third layer.

From the viewpoint of exerting the effect of the present invention more effectively, it is preferred that the thickness at the other end be smaller than the thickness at the one end in the first layer.

From the viewpoint of suppressing generation of optical strain more effectively, it is preferred that the thickness at the other end be smaller than the thickness at the one end in the first layer, and the thickness at the other end be larger than the thickness at the one end in the third layer.

From the viewpoint of further enhancing the sound insulating property, it is preferred that the thickness at the other end be smaller than the thickness at the one end in the first layer, and the thickness at the other end and the thickness at the one end be the same, or the thickness at the other end be smaller than the thickness at the one end in the third layer. From the viewpoint of still further enhancing the sound insulating property, it is preferred that the thickness at the other end be smaller than the thickness at the one end in the first layer, and the thickness at the other end be smaller than the thickness at the one end in the third layer.

From the viewpoint of suppressing generation of optical strain more effectively, it is preferred that the layer in which the thickness at the other end is smaller than the thickness at the one end have a portion having a rectangular sectional shape in the thickness direction, and a portion having a wedge-like sectional shape in the thickness direction. In this case, it is preferred that the rectangular portion be located at the one end side, and the wedge-like portion be located at the other end side.

In the cross section in the thickness direction of the interlayer film, it is preferred that there be a portion where the area (sectional area) of the first layer or the third layer be larger than the area (sectional area) of the second layer, and it is more preferred that there be a portion where each of the areas (sectional areas) of the first layer and the third layer be larger than the area (sectional area) of the second layer. In this case, it is possible to suppress generation of optical strain more effectively.

In the cross section in the thickness direction of the interlayer film, it is preferred that there be a portion where the area (sectional area) of the second layer is larger than the area (sectional area) of the first layer or the third layer, and it is more preferred that there be a portion that is larger than the area (sectional areas) of the first layer and larger than the area (sectional area) of the third layer. In this case, it is possible to further enhance the sound insulating property.

The interlayer film may have a uniform-thickness part. The uniform-thickness part means that the variation in thickness does not exceed 10 um per a distance range of 10 cm in the direction connecting the one end and the other end of the interlayer film. Therefore, the uniform-thickness part refers to the part where the variation in thickness does not exceed 10 um per a distance range of 10 cm in the direction connecting the one end and the other end of the interlayer film. To be more specific, the uniform-thickness part refers to the part where the thickness does not vary at all in the direction connecting the one end and the other end of the interlayer film, or the thickness varies by 10 um or less per a distance range of 10 cm in the direction connecting the one end and the other end of the interlayer film.

It is preferred that the uniform-thickness part be located closer to the other end side than the middle position between the one end and the other end of the interlayer film.

The distance of the interlayer film in the direction connecting the one end and the other end of the interlayer film is defined as a distance L. The distance of the first layer in the direction connecting the one end and the other end of the first layer is defined as a distance L1. The distance of the second layer in the direction connecting the one end and the other end of the second layer is defined as a distance L2. The distance of the third layer in the direction connecting the one end and the other end of the third layer is defined as a distance L3. The distance of the layer in the direction connecting the one end and the other end of the layer in which the thickness at the other end is smaller than the thickness at the one end is defined as a distance L4.

It is preferred that the interlayer film have a minimum thickness in the region at a distance of 0L to 0.5L from the one end toward the other end, and a maximum thickness in the region at a distance of 0L to 0.5L from the other end toward the one end. It is more preferred that the interlayer film have a minimum thickness in the region at a distance of 0L to 0.2L from the one end toward the other end, and a maximum thickness in the region at a distance of 0L to 0.2L from the other end toward the one end. It is further preferred that the interlayer film have a minimum thickness at the one end and the interlayer film have a maximum thickness at the other end. In these cases, each of the minimum thickness and the maximum thickness may exist in part of each region, or may exist in the entirety of each region.

The distance L between one end and the other end of the interlayer film is preferably 0.5 m or more, more preferably 0.8 m or more, further preferably 1 m or more, and is preferably 3 m or less, more preferably 2 m or less, further preferably 1.5 m or less.

The distance L1 between one end and the other end of the first layer is preferably 0.5 m or more, more preferably 0.8 m or more, further preferably 1 m or more, and is preferably 3 m or less, more preferably 2 m or less, further preferably 1.5 m or less.

The distance L2 between one end and the other end of the second layer is preferably 0.5 m or more, more preferably 0.8 m or more, further preferably 1 m or more, and is preferably 3 m or less, more preferably 2 m or less, further preferably 1.5 m or less.

The distance L3 between one end and the other end of the third layer is preferably 0.5 m or more, more preferably 0.8 m or more, further preferably 1 m or more, and is preferably 3 m or less, more preferably 2 m or less, further preferably 1.5 m or less.

The distance L4 between one end and the other end of the layer in which the thickness at the other end is smaller than the thickness at the one end is preferably 0.5 m or more, more preferably 0.8 m or more, further preferably 1 m or more, and is preferably 3 m or less, more preferably 2 m or less, further preferably 1.5 m or less.

A ratio of distance L1 to distance L (distance L1/distance L) is preferably 0.3 or more, more preferably 0.5 or more, further preferably 0.7 or more, most preferably 1. The ratio (distance L1/distance L) may be 1 or less, and may be 0.95 or less.

A ratio of distance L2 to distance L (distance L2/distance L) is preferably 0.3 or more, more preferably 0.5 or more, further preferably 0.7 or more, most preferably 1. The ratio (distance L2/distance L) may be 1 or less, and may be 0.95 or less.

A ratio of distance L3 to distance L (distance L3/distance L) is preferably 0.3 or more, more preferably 0.5 or more, further preferably 0.7 or more, most preferably 1. The ratio (distance L3/distance L) may be 1 or less, and may be 0.95 or less.

A ratio of distance L4 to distance L (distance L4/distance L) is preferably 0.3 or more, more preferably 0.5 or more, further preferably 0.7 or more, most preferably 1. The ratio (distance L4/distance L) may be 1 or less, and may be 0.95 or less.

In the interlayer film, the thickness at the one end is preferably 300 pm or more, more preferably 500 um or more, further preferably 700 um or more, and is preferably 1600 um or less, more preferably 1400 um or less, further preferably 1200 um or less. When the thickness of the one end of the interlayer film is the above lower limit or more, the penetration resistance and the flexural rigidity of laminated glass are further enhanced. When the thickness of the one end of the interlayer film is the above upper limit or less, the transparency of the interlayer film and the laminated glass is further improved.

The maximum thickness of the interlayer film is preferably 400 um or more, more preferably 600 um or more, further preferably 800 um or more, especially preferably 1000 um or more and is preferably 3.5 mm or less, more preferably 2.9 mm or less. When the maximum thickness of the interlayer film is the above lower limit or more, the penetration resistance and the flexural rigidity of laminated glass are further enhanced. When the thickness of the interlayer film is the above upper limit or less, the transparency of the interlayer film and the laminated glass is further improved.

The average thickness of the first layer is preferably 100 um or more, more preferably 200 um or more, further preferably 300 um or more, and is preferably 1100 pm or less, more preferably 950 um or less, further preferably 800 um or less. When the average thickness of the first layer is the above lower limit or more and the above upper limit or less, it is possible to exert the effect of the present invention more effectively.

The average thickness of the second layer is preferably 50 um or more, more preferably 60 um or more, further preferably 80 um or more, and is preferably 1200 um or less, more preferably 1000 um or less, further preferably 800 um or less. When the average thickness of the second layer is the above lower limit or more and the above upper limit or less, it is possible to exert the effect of the present invention more effectively.

The average thickness of the third layer is preferably 100 um or more, more preferably 200 um or more, further preferably 300 um or more, and is preferably 1100 pm or less, more preferably 950 um or less, further preferably 800 um or less. When the average thickness of the third layer is the above lower limit or more and the above upper limit or less, it is possible to exert the effect of the present invention more effectively.

In the layer in which the thickness at the other end is smaller than the thickness at the one end, an absolute value of difference between the thickness at the one end of the layer and the thickness at the other end of the layer is preferably 1 um or more, more preferably 5 um or more, further preferably 10 um or more, and is preferably 600 um or less, more preferably 500 um or less, further preferably 400 um or less. When the absolute value of difference is the above lower limit or more and the above upper limit or less, it is possible to exert the effect of the present invention more effectively. It is preferred that the interlayer film have at least one layer satisfying the above preferred upper limit or lower limit of the absolute value of difference (the layer in which the thickness at the other end is smaller than the thickness at the one end).

The thickness of the interlayer film at a predetermined position is defined as T µm, the thickness of the first layer at the same position as the predetermined position is defined as T₁ um, and the thickness of the third layer at the same position as the predetermined position is defined as T₃ um.

When the thickness is measured from one end toward the other end of the interlayer film, an absolute value of difference between the maximum value of T₁/T and the minimum value of T₁/T is preferably 0.03 or more, more preferably 0.05 or more, further preferably 0.1 or more, and is preferably 0.7 or less, more preferably 0.5 or less, further preferably 0.4 or less. When the absolute value of difference is the above lower limit or more and the above upper limit or less, it is possible to exert the effect of the present invention more effectively. T₁/T is a ratio of T₁ to T.

When the thickness is measured from one end toward the other end of the interlayer film, an absolute value of difference between the maximum value of T₃/T and the minimum value of T₃/T is preferably 0.03 or more, more preferably 0.05 or more, further preferably 0.1 or more, and is preferably 0.7 or less, more preferably 0.5 or less, further preferably 0.4 or less. When the absolute value of difference is the above lower limit or more and the above upper limit or less, it is possible to exert the effect of the present invention more effectively. T₃/T is a ratio of T₃ to T.

The interlayer film has a region where the thickness increases from the one end side to the other end side. The interlayer film may be an interlayer film in which the increment in thickness from one end to the other end of the interlayer film is constant, and may be an interlayer film in which the increment is not constant. The interlayer film may have a portion where the increment in thickness is constant in the region where the thickness increases from one end to the other end. The interlayer film may have a portion where the increment in thickness increases in the region where the thickness increases from one end to the other end. The interlayer film may have a portion where the increment in thickness decreases in the region where the thickness increases from one end to the other end. The interlayer film may have a region where the thickness is uniform.

The first layer may have a region where the thickness increases from the one end side to the other end side. The first layer may have a portion where the increment in thickness is constant in the region where the thickness increases from one end to the other end. The first layer may have a portion where the increment in thickness increases in the region where the thickness increases from one end to the other end. The first layer may have a portion where the increment in thickness decreases in the region where the thickness increases from one end to the other end. The first layer may have a region where the thickness decreases from the one end side to the other end side. The first layer may have a portion where the decrement in thickness is constant in the region where the thickness decreases from one end to the other end. The first layer may have a portion where the decrement in thickness increases in the region where the thickness decreases from one end to the other end. The first layer may have a portion where the decrement in thickness decreases in the region where the thickness decreases from one end to the other end. The first layer may have a region where the thickness is uniform.

The second layer may have a region where the thickness increases from the one end side to the other end side. The second layer may have a portion where the increment in thickness is constant in the region where the thickness increases from one end to the other end. The second layer may have a portion where the increment in thickness increases in the region where the thickness increases from one end to the other end. The second layer may have a portion where the increment in thickness decreases in the region where the thickness increases from one end to the other end. The second layer may have a region where the thickness decreases from the one end side to the other end side. The second layer may have a portion where the decrement in thickness is constant in the region where the thickness decreases from one end to the other end. The second layer may have a portion where the decrement in thickness increases in the region where the thickness decreases from one end to the other end. The second layer may have a portion where the decrement in thickness decreases in the region where the thickness decreases from one end to the other end. The second layer may have a region where the thickness is uniform.

The third layer may have a region where the thickness increases from the one end side to the other end side. The third layer may have a portion where the increment in thickness is constant in the region where the thickness increases from one end to the other end. The third layer may have a portion where the increment in thickness increases in the region where the thickness increases from one end to the other end. The third layer may have a portion where the increment in thickness decreases in the region where the thickness increases from one end to the other end. The third layer may have a region where the thickness decreases from the one end side to the other end side. The third layer may have a portion where the decrement in thickness is constant in the region where the thickness decreases from one end to the other end. The third layer may have a portion where the decrement in thickness increases in the region where the thickness decreases from one end to the other end. The third layer may have a portion where the decrement in thickness decreases in the region where the thickness decreases from one end to the other end. The third layer may have a region where the thickness is uniform.

In order to suppress double images, the wedge angle (θ) of the interlayer film can be appropriately set according to the fitting angle of laminated glass. The wedge angle (θ) is a wedge angle of the interlayer film as a whole.

From the viewpoint of further suppressing double images, the wedge angle (θ) of the interlayer film is preferably 0.1 mrad (0.00575 degrees) or more, more preferably 0.2 mrad (0.0115 degrees) or more, and is preferably 2 mrad (0.1146 degrees) or less, more preferably 0.7 mrad (0.0401 degrees) or less. When the wedge angle (θ) is the above lower limit or more, it is possible to obtain laminated glass suited for cars such as a truck or a bus in which the attachment angle of the windshield is large. When the wedge angle (θ) is the above upper limit or less, it is possible to obtain laminated glass suited for cars such as a sports car in which the attachment angle of the windshield is small.

The wedge angle (θ) of the interlayer film is an interior angle formed at the intersection point between a straight line connecting surface parts on the one side of the interlayer film (first surface portion) of the maximum thickness portion and the minimum thickness portion in the interlayer film, and a straight line connecting surface parts of the other side of the interlayer film (second surface portion) of the maximum thickness portion and the minimum thickness portion in the interlayer film. When the portion with a rectangular sectional shape in the thickness direction of the interlayer film is the maximum thickness portion of the interlayer film, the straight line is drawn so that the wedge angle (Θ) is maximum. When the portion with a rectangular sectional shape in the thickness direction of the interlayer film is the minimum thickness portion of the interlayer film, the straight line is drawn so that the wedge angle (θ) is maximum. A wedge angle (θ) of the interlayer film can be approximately calculated in the following manner. Thickness of the interlayer film is measured at each of the maximum thickness portion and the minimum thickness portion. On the basis of the result of (absolute value of difference between thickness in maximum thickness portion of interlayer film and thickness in minimum thickness portion of interlayer film (µm) ÷ distance between maximum thickness portion and minimum thickness portion (mm)), a wedge angle (θ) of the interlayer film is approximately calculated.

As a measuring device for use for measurement of a wedge angle θ of the interlayer film, and a thickness of the interlayer film, a contact type thickness tester "TOF-4R" (available from Yamabun Electronics Co., Ltd.) or the like can be recited.

Measurement of the thickness is conducted such that the distance is the shortest from the one end toward the other end by using the above-described measuring device at a film conveyance speed of 2.15 mm/minute to 2.25 mm/minute.

As a measuring device for use for measurement of a wedge angle (θ) of the interlayer film, and a thickness of the interlayer film after the interlayer film is made into laminated glass, a non-contact type multilayer film thickness measuring instrument "OPTIGAUGE" (available from Lumetrics, Inc.) or the like can be recited. Use of the measuring instrument makes it possible to measure the thickness of the interlayer film while the interlayer film is in the laminated glass.

The interlayer film is suitably used for laminated glass serving as a head-up display (HUD). It is preferred that the interlayer film be an interlayer film for HUD. It is preferred that the interlayer film have a region for display corresponding to a display region of HUD.

From the viewpoint of suppressing double images more effectively, it is preferred that the interlayer film have the region for display in a region between a position of 6 cm from the one end toward the other end of the interlayer film and a position of 63.8 cm from the one end toward the other end.

From the viewpoint of suppressing double images more effectively, it is more preferred that the interlayer film have the region for display in a region between a position of 8 cm from the one end toward the other end of the interlayer film and a position of 61.8 cm from the one end toward the other end.

From the viewpoint of suppressing double images more effectively, it is further preferred that the interlayer film have the region for display in a region between a position of 9 cm from the one end toward the other end of the interlayer film and a position of 60.8 cm from the one end toward the other end.

From the viewpoint of suppressing double images more effectively, it is especially preferred that the interlayer film have the region for display in a region between a position of 9.5 cm from the one end toward the other end of the interlayer film and a position of 60.3 cm from the one end toward the other end.

From the viewpoint of suppressing double images more effectively, it is most preferred that the interlayer film have the region for display in a region between a position of 10 cm from the one end toward the other end of the interlayer film and a position of 59.8 cm from the one end toward the other end.

The region for display may exist in a part or the whole of the region up to the aforementioned position (for example, 63.8 cm) from the one end toward the other end of the interlayer film. The region for display may exist in a size of about 30 cm in the direction connecting the one end and the other end.

From the viewpoint of suppressing double images effectively, it is preferred that the interlayer film have a portion with a sectional shape in the thickness direction of a wedge-like shape in the region between a position of 6 cm from the one end toward the other end of the interlayer film and a position of 63.8 cm from the one end toward the other end.

From the viewpoint of suppressing double images effectively, it is more preferred that the interlayer film have a portion with a sectional shape in the thickness direction of a wedge-like shape in the region between a position of 8 cm from the one end toward the other end of the interlayer film and a position of 61.8 cm from the one end toward the other end.

From the viewpoint of suppressing double images effectively, it is further preferred that the interlayer film have a portion with a sectional shape in the thickness direction of a wedge-like shape in the region between a position of 9 cm from the one end toward the other end of the interlayer film and a position of 60.8 cm from the one end toward the other end.

From the viewpoint of suppressing double images effectively, it is especially preferred that the interlayer film have a portion with a sectional shape in the thickness direction of a wedge-like shape in the region between a position of 9.5 cm from the one end toward the other end of the interlayer film and a position of 60.3 cm from the one end toward the other end.

From the viewpoint of suppressing double images effectively, it is most preferred that the interlayer film have a portion with a sectional shape in the thickness direction of a wedge-like shape in the region between a position of 10 cm from the one end toward the other end of the interlayer film and a position of 59.8 cm from the one end toward the other end.

The portion with a sectional shape in the thickness direction of a wedge-like shape may exist in a part or the whole of the region up to the aforementioned position (for example, 63.8 cm) from the one end toward the other end. The portion with a sectional shape in the thickness direction of a wedge-like shape may exist in a size of about 30 cm in the direction connecting the one end and the other end.

The interlayer film may have a shading region. The shading region may be separate from the region for display. The shading region is provided so as to prevent a driver from feeling glare while driving, for example, by sunlight or outdoor lighting. The shading region can be provided so as to impart the heat blocking property. It is preferred that the shading region be located in an edge portion of the interlayer film. It is preferred that the shading region be belt-shaped.

In the shading region, a coloring agent or a filler may be used so as to change the color and the visible light transmittance. The coloring agent or the filler may be contained in a partial region in the thickness direction of the interlayer film and may be contained in the entire region in the thickness direction of the interlayer film.

From the viewpoint of providing better display, and further broadening the field of view, the visible light transmittance of the region for display is preferably 70% or more, more preferably 80% or more, further preferably 88% or more, especially preferably 90% or more. It is preferred that the visible light transmittance of the region for display be higher than the visible light transmittance of the shading region. The visible light transmittance of the region for display may be lower than the visible light transmittance of the shading region. The visible light transmittance of the region for display is higher than the visible light transmittance of the shading region preferably by 50% or more, more preferably by 60% or more.

When the visible light transmittance varies in the region for display and the shading region of the interlayer film, the visible light transmittance is measured at the center position of the region for display and at the center position of the shading region.

The visible light transmittance at a wavelength ranging from 380 nm to 780 nm of the obtained laminated glass can be measured by using a spectrophotometer ("U-4100" available from Hitachi High-Tech Corporation) in accordance with JIS R3211:1998. As the glass plate, it is preferred to use clear glass having a thickness of 2 mm.

It is preferred that the region for display have a length direction and a width direction. For excellent versatility of the interlayer film, it is preferred that the width direction of the region for display be the direction connecting the one end and the other end. It is preferred that the region for display be belt-shaped.

It is preferred that the interlayer film have an MD direction and a TD direction. For example, the interlayer film is obtained by melt extrusion molding. The MD direction is a flow direction of an interlayer film at the time of producing the interlayer film. The TD direction is a direction orthogonal to the flow direction of an interlayer film at the time of producing the interlayer film and a direction orthogonal to the thickness direction of the interlayer film. It is preferred that the one end and the other end be located at the opposite sides of the TD direction.

Hereinafter, materials that can be used in the interlayer film according to the present invention are specifically described.

### (Thermoplastic resin)

It is preferred that the interlayer film contain a thermoplastic resin (hereinafter, sometimes described as a thermoplastic resin (0)). It is preferred that the interlayer film contain a polyvinyl acetal resin (hereinafter, sometimes described as a polyvinyl acetal resin (0)) as the thermoplastic resin (0). It is preferred that the first layer contain a thermoplastic resin (hereinafter, sometimes described as a thermoplastic resin (1)). It is preferred that the first layer contain a polyvinyl acetal resin (hereinafter, sometimes described as a polyvinyl acetal resin (1)) as the thermoplastic resin (1). It is preferred that the second layer contain a thermoplastic resin (hereinafter, sometimes described as a thermoplastic resin (2)). It is preferred that the second layer contain a polyvinyl acetal resin (hereinafter, sometimes described as a polyvinyl acetal resin (2)) as the thermoplastic resin (2). It is preferred that the third layer contain a thermoplastic resin (hereinafter, sometimes described as a thermoplastic resin (3)). It is preferred that the third layer contain a polyvinyl acetal resin (hereinafter, sometimes described as a polyvinyl acetal resin (3)) as the thermoplastic resin (3). The thermoplastic resin (1), the thermoplastic resin (2), and the thermoplastic resin (3) may be the same or different from one another. For still higher sound insulating property, it is preferred that the thermoplastic resin (2) be different from the thermoplastic resin (1) and the thermoplastic resin (3). Each of the polyvinyl acetal resin (1), the polyvinyl acetal resin (2), and the polyvinyl acetal resin (3) may be the same or different from one another. For still higher sound insulating property, it is preferred that the polyvinyl acetal resin (2) be different from the polyvinyl acetal resin (1) and the polyvinyl acetal resin (3). One kind of each of the thermoplastic resin (0), the thermoplastic resin (1), the thermoplastic resin (2), and the thermoplastic resin (3) may be used alone and two or more kinds thereof may be used in combination. One kind of each of the polyvinyl acetal resin (0), the polyvinyl acetal resin (1), the polyvinyl acetal resin (2), and the polyvinyl acetal resin (3) may be used alone and two or more kinds thereof may be used in combination.

Examples of the thermoplastic resin include a polyvinyl acetal resin, polyvinyl acetate, an ethylene-vinyl acetate copolymer resin, an ethylene-acrylic acid copolymer resin, a polyurethane resin, an ionomer resin, a polyvinyl alcohol resin, and the like. Thermoplastic resins other than these may be used.

For example, the polyvinyl acetal resin can be produced by acetalizing polyvinyl alcohol (PVA) with an aldehyde. It is preferred that the polyvinyl acetal resin be an acetalized product of polyvinyl alcohol. The polyvinyl alcohol can be obtained, for example, by saponifying polyvinyl acetate. The saponification degree of the polyvinyl alcohol generally lies within the range of 70% by mole to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more and is preferably 5000 or less, more preferably 4000 or less, further preferably 3500 or less. When the average polymerization degree is the above lower limit or more, the penetration resistance of the laminated glass is further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. The number of carbon atoms of the acetal group in the polyvinyl acetal resin is preferably 3 to 5, more preferably 3 or 4. When the number of carbon atoms of the acetal group in the polyvinyl acetal resin is 3 or more, the glass transition temperature of the interlayer film is sufficiently lowered. The number of carbon atoms of the acetal group in the polyvinyl acetal resin may be 4 or 5.

The aldehyde is not particularly limited. In general, an aldehyde with 1 to 10 carbon atoms is suitably used. Examples of the aldehyde with 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. The aldehyde is preferably propionaldehyde, n-butyraldehyde, isobutyraldehyde, n-hexylaldehyde, or n-valeraldehyde, more preferably propionaldehyde, n-butyraldehyde or isobutyraldehyde, and further preferably n-butyraldehyde. One kind of the aldehyde may be used alone, and two or more kinds thereof may be used in combination.

The content of the hydroxyl group (the amount of hydroxyl groups) of the polyvinyl acetal resin (0) is preferably 15% by mole or more and more preferably 18% by mole or more and is preferably 40% by mole or less and more preferably 35% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

A content of the hydroxyl group (the amount of hydroxyl groups) of the polyvinyl acetal resin (2) is preferably 17% by mole or more, more preferably 20% by mole or more, further preferably 22% by mole or more and is preferably 28% by mole or less, more preferably 27% by mole or less, further preferably 25% by mole or less, especially preferably 24% by mole or less. When the content of the hydroxyl group is the above lower limit or more, the mechanical strength of the interlayer film is further enhanced. In particular, when the content of the hydroxyl group of the polyvinyl acetal resin (2) is 20% by mole or more, the resin is high in reaction efficiency and is excellent in productivity, and moreover, when being 28% by mole or less, the sound insulating property of laminated glass is further enhanced. Moreover, when the content of the hydroxyl group is the above upper limit or less, the flexibility of the interlayer film is enhanced and the handling of the interlayer film is facilitated.

The content of the hydroxyl group (hydroxyl group amount) of the polyvinyl acetal resin (1) and the polyvinyl acetal resin (3) is preferably 25% by mole or more, more preferably 28% by mole or more, more preferably 30% by mole or more, still more preferably 31.5% by mole or more, further preferably 32% by mole or more, especially preferably 33% by mole or more. The content of the hydroxyl group (hydroxyl group amount) of the polyvinyl acetal resin (1) and the polyvinyl acetal resin (3) is preferably 38% by mole or less, more preferably 37% by mole or less, further preferably 36.5% by mole or less, especially preferably 36% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

From the viewpoint of further enhancing the sound insulating property, it is preferred that the content of the hydroxyl group of the polyvinyl acetal resin (2) be lower than the content of the hydroxyl group of the polyvinyl acetal resin (1). From the viewpoint of further enhancing the sound insulating property, it is preferred that the content of the hydroxyl group of the polyvinyl acetal resin (2) be lower than the content of the hydroxyl group of the polyvinyl acetal resin (3). An absolute value of a difference between the content of the hydroxyl group of the polyvinyl acetal resin (2) and the content of the hydroxyl group of the polyvinyl acetal resin (1) is defined as absolute value A, and an absolute value of a difference between the content of the hydroxyl group of the polyvinyl acetal resin (2) and the content of the hydroxyl group of the polyvinyl acetal resin (3) is defined as absolute value B. From the viewpoint of further enhancing the sound insulating property, each of the absolute value A and the absolute value B is preferably 1% by mole or more, more preferably 5% by mole or more, further preferably 9% by mole or more, especially preferably 10% by mole or more, most preferably 12% by mole or more. Each of the absolute value A and the absolute value B is preferably 20% by mole or less.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in accordance with JIS K6728 "Testing methods for polyvinyl butyral".

The acetylation degree (the amount of acetyl groups) of the polyvinyl acetal resin (0) is preferably 0.1% by mole or more, more preferably 0.3% by mole or more, further preferably 0.5% by mole or more and is preferably 30% by mole or less, more preferably 25% by mole or less, and further preferably 20% by mole or less. When the acetylation degree is the above lower limit or more, the compatibility between the polyvinyl acetal resin and a plasticizer is enhanced. When the acetylation degree is the above upper limit or less, the moisture resistance of the interlayer film and laminated glass is enhanced.

The acetylation degree (the amount of acetyl groups) of the polyvinyl acetal resin (2) is preferably 0.01% by mole or more, more preferably 0.1% by mole or more, even more preferably 7% by mole or more, further preferably 9% by mole or more and is preferably 30% by mole or less, more preferably 25% by mole or less, further preferably 24% by mole or less, especially preferably 20% by mole or less. When the acetylation degree is the above lower limit or more, the compatibility between the polyvinyl acetal resin and a plasticizer is enhanced. When the acetylation degree is the above upper limit or less, the moisture resistance of the interlayer film and laminated glass is enhanced. In particular, when the acetylation degree of the polyvinyl acetal resin (2) is 0.1% by mole or more and is 25% by mole or less, the resulting laminated glass is excellent in penetration resistance.

The acetylation degree (acetyl group amount) of each of the polyvinyl acetal resin (1) and the polyvinyl acetal resin (3) is preferably 0.01% by mole or more, more preferably 0.5% by mole or more, and is preferably 10% by mole or less, more preferably 2% by mole or less. When the acetylation degree is the above lower limit or more, the compatibility between the polyvinyl acetal resin and a plasticizer is enhanced. When the acetylation degree is the above upper limit or less, the moisture resistance of the interlayer film and laminated glass is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (0) (the butyralization degree in the case of a polyvinyl butyral resin) is preferably 60% by mole or more and more preferably 63% by mole or more and is preferably 85% by mole or less, more preferably 75% by mole or less, further preferably 70% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of the polyvinyl acetal resin (2) (the butyralization degree in the case of a polyvinyl butyral resin) is preferably 47% by mole or more and more preferably 60% by mole or more and is preferably 85% by mole or less, more preferably 80% by mole or less, further preferably 75% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of the polyvinyl acetal resin (1) and the polyvinyl acetal resin (3) (the butyralization degree in the case of a polyvinyl butyral resin) is preferably 55% by mole or more and more preferably 60% by mole or more and is preferably 75% by mole or less and more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

In 100% by weight of the thermoplastic resin contained in the interlayer film, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the interlayer film, the content of the polyvinyl acetal resin may be 100% by weight or less. It is preferred that the main ingredient (50% by weight or more) of the thermoplastic resin of the interlayer film be a polyvinyl acetal resin.

In 100% by weight of the thermoplastic resin contained in the first layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the first layer, the content of the polyvinyl acetal resin may be 100% by weight or less. It is preferred that the main ingredient (50% by weight or more) of the thermoplastic resin of the first layer be a polyvinyl acetal resin.

In 100% by weight of the thermoplastic resin contained in the second layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the second layer, the content of the polyvinyl acetal resin may be 100% by weight or less. It is preferred that the main ingredient (50% by weight or more) of the thermoplastic resin of the second layer be a polyvinyl acetal resin.

In 100% by weight of the thermoplastic resin contained in the third layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the third layer, the content of the polyvinyl acetal resin may be 100% by weight or less. It is preferred that the main ingredient (50% by weight or more) of the thermoplastic resin of the third layer be a polyvinyl acetal resin.

### (Plasticizer)

From the viewpoint of further enhancing the adhesive force of an interlayer film, it is preferred that the interlayer film according to the present invention contain a plasticizer (hereinafter, sometimes described as a plasticizer (0)). It is preferred that the first layer contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). When the thermoplastic resin contained in the interlayer film is a polyvinyl acetal resin, it is especially preferred that the interlayer film (the respective layers) contain a plasticizer. It is preferred that a layer containing a polyvinyl acetal resin contain a plasticizer.

The plasticizer is not particularly limited. As the plasticizer, a conventionally known plasticizer can be used. One kind of the plasticizer may be used alone and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. It is preferred that the plasticizer be an organic ester plasticizer. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, benzoic acid and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. As the organic ester plasticizer, other organic ester plasticizer than those recited above may be used. As the adipic acid ester, adipic acid esters other than the aforementioned adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

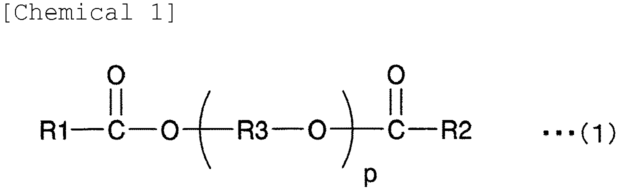

In the formula (1), R1 and R2 each represent an organic group with 2 to 10 carbon atoms, R3 represents an ethylene group, an isopropylene group, or an n-propylene group, and p represents an integer of 3 to 10. R1 and R2 in the formula (1) each are preferably an organic group with 5 to 10 carbon atoms, and more preferably an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate (3GO) or triethylene glycol di-2-ethylbutyrate (3GH), and it is further preferred that the plasticizer include triethylene glycol di-2-ethylhexanoate (3GO).

In the interlayer film, the content of the plasticizer (0) per 100 parts by weight of the thermoplastic resin (0) is defined as content (0). The content (0) is preferably 5 parts by weight or more, more preferably 25 parts by weight or more, further preferably 30 parts by weight or more, and is preferably 100 parts by weight or less, more preferably 60 parts by weight or less, further preferably 50 parts by weight or less. When the content (0) is the above lower limit or more, the penetration resistance of the laminated glass is further enhanced. When the content (0) is the above upper limit or less, the transparency of the interlayer film is further enhanced.

In the second layer, the content of the plasticizer (2) per 100 parts by weight of the thermoplastic resin (2) is defined as a content (2). The content (2) is preferably 50 parts by weight or more, more preferably 55 parts by weight or more, further preferably 60 parts by weight or more. The content (2) is preferably 100 parts by weight or less, more preferably 90 parts by weight or less, further preferably 85 parts by weight or less, especially preferably 80 parts by weight or less. When the content (2) is the above lower limit or more, the flexibility of the interlayer film is enhanced and the handling of the interlayer film is facilitated. When the content (2) is the above upper limit or less, the penetration resistance of laminated glass is further enhanced.

In the first layer, the content of the plasticizer (1) per 100 parts by weight of the thermoplastic resin (1) is defined as content (1). In the third layer, the content of the plasticizer (3) per 100 parts by weight of the thermoplastic resin (3) is defined as content (3). Each of the content (1) and the content (3) is preferably 5 parts by weight or more, more preferably 10 parts by weight or more, still more preferably 15 parts by weight or more, further preferably 20 parts by weight or more, especially preferably 24 parts by weight or more, and most preferably 25 parts by weight or more. Each of the content (1) and the content (3) is preferably 45 parts by weight or less, more preferably 40 parts by weight or less, further preferably 35 parts by weight or less, especially preferably 32 parts by weight or less, and most preferably 30 parts by weight or less. When the content (1) and the content (3) are the above lower limit or more, the flexibility of the interlayer film is enhanced and the handling of the interlayer film is facilitated. When the content (1) and the content (3) are the above upper limit or less, the penetration resistance of the laminated glass is further enhanced.

For the purpose of enhancing the sound insulating property of the laminated glass, it is preferred that the content (2) be larger than the content (1) and it is preferred that the content (2) be larger than the content (3) .

From the viewpoint of further enhancing the sound insulating property of the laminated glass, each of the absolute value of difference between the content (2) and the content (1) and the absolute value of difference between the content (2) and the content (3) is preferably 10 parts by weight or more, more preferably 15 parts by weight or more, and further preferably 20 parts by weight or more. Each of the absolute value of difference between the content (2) and the content (1) and the absolute value of difference between the content (2) and the content (3) is preferably 80 parts by weight or less, more preferably 75 parts by weight or less, further preferably 70 parts by weight or less.

### (Heat shielding substance)

It is preferred that the interlayer film contain a heat shielding substance. It is preferred that the first layer contain a heat shielding substance. It is preferred that the second layer contain a heat shielding substance. It is preferred that the third layer contain a heat shielding substance. One kind of the heat shielding substance may be used alone, and two or more kinds thereof may be used in combination.

It is preferred that the heat shielding substance contain at least one kind of Ingredient X among a phthalocyanine compound, a naphthalocyanine compound, and an anthracyanine compound or contain heat shielding particles. In this case, the heat shielding substance may contain both of the Ingredient X and the heat shielding particles.

### Ingredient X:

It is preferred that the interlayer film contain at least one kind of Ingredient X among a phthalocyanine compound, a naphthalocyanine compound, and an anthracyanine compound. It is preferred that the first layer contain the Ingredient X. It is preferred that the second layer contain the Ingredient X. It is preferred that the third layer contain the Ingredient X. One kind of the Ingredient X may be used alone and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding property and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. From the viewpoint of still further enhancing the heat shielding property of the interlayer film and the laminated glass, it is preferred that the Ingredient X have a structural unit in which an oxygen atom is bonded to a vanadium atom.

In 100% by weight of the interlayer film or in 100% by weight of a layer containing the Ingredient X (a first layer, a second layer, or a third layer), the content of the Ingredient X is preferably 0.001% by weight or more, more preferably 0.005% by weight or more, further preferably 0.01% by weight or more, especially preferably 0.02% by weight or more. In 100% by weight of the interlayer film or in 100% by weight of a layer containing the Ingredient X (a first layer, a second layer, or a third layer), the content of the Ingredient X is preferably 0.2% by weight or less, more preferably 0.1% by weight or less, further preferably 0.05% by weight or less, especially preferably 0.04% by weight or less. When the content of the Ingredient X is the above lower limit or more and the above upper limit or less, the heat shielding property is sufficiently enhanced and the visible light transmittance is sufficiently enhanced. For example, it is possible to make the visible light transmittance 70% or more.

### Heat shielding particles:

It is preferred that the interlayer film contain heat shielding particles. It is preferred that the first layer contain the heat shielding particles. It is preferred that the second layer contain the heat shielding particles. It is preferred that the third layer contain the heat shielding particles. The heat shielding particle is of a heat shielding substance. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of laminated glass, it is more preferred that the heat shielding particles be metal oxide particles. It is preferred that the heat shielding particle be a particle (a metal oxide particle) formed from an oxide of a metal.

The energy amount of an infrared ray with a wavelength (780 nm or more) that is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, tungsten oxide particles, tin-doped indium oxide particles (ITO particles), tin-doped zinc oxide particles and silicon-doped zinc oxide particles, and lanthanum hexaboride (LaB₆) particles, and the like. Heat shielding particles other than these may be used as the heat shielding particles. Since the heat ray shielding function is high, the heat shielding particles are preferably metal oxide particles, more preferably ATO particles, GZO particles, IZO particles, ITO particles or tungsten oxide particles, and especially preferably ITO particles or tungsten oxide particles. Since the heat ray shielding function is high and the particles are readily available, the heat shielding particles are preferably tin-doped indium oxide particles (ITO particles), and are also preferably tungsten oxide particles.

With regard to the interlayer film and laminated glass, from the viewpoint of further enhancing the heat shielding properties thereof, it is preferred that the tungsten oxide particles be metal-doped tungsten oxide particles. Examples of the "tungsten oxide particles" include metal-doped tungsten oxide particles. Examples of the metal-doped tungsten oxide particles include sodium-doped tungsten oxide particles, cesium-doped tungsten oxide particles, thalliumdoped tungsten oxide particles, rubidium-doped tungsten oxide particles, and the like.

With regard to the interlayer film and laminated glass, from the viewpoint of further enhancing the heat shielding properties thereof, cesium-doped tungsten oxide particles are especially preferred. With regard to the interlayer film and laminated glass, from the viewpoint of still further enhancing the heat shielding properties thereof, it is preferred that the cesium-doped tungsten oxide particles be tungsten oxide particles represented by the formula: Cs_{0.33}WO₃.

The average particle diameter of the heat shielding particles is preferably 0.01 um or more, more preferably 0.02 um or more, and is preferably 0.1 um or less, more preferably 0.05 um or less. When the average particle diameter is the above lower limit or more, the heat ray shielding property is sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of a layer containing the heat shielding particles (a first layer, a second layer, or a third layer), the content of the heat shielding particles (in particular, the content of tungsten oxide particles) is preferably 0.01% by weight or more, more preferably 0.1% by weight or more, further preferably 1% by weight or more, especially preferably 1.5% by weight or more. In 100% by weight of the interlayer film or in 100% by weight of a layer containing the heat shielding particles (a first layer, a second layer, or a third layer), the content of the heat shielding particles (in particular, the content of tungsten oxide particles) is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding property is sufficiently enhanced and the visible light transmittance is sufficiently enhanced.

### (Metal salt)

It is preferred that the interlayer film contain at least one kind of metal salt (hereinafter, sometimes described as Metal salt M) of alkali metal salts and alkali earth metal salts. It is preferred that the first layer contain the Metal salt M. It is preferred that the second layer contain the Metal salt M. It is preferred that the third layer contain the Metal salt M. The alkali earth metal means six metals of Be, Mg, Ca, Sr, Ba, and Ra. By the use of the Metal salt M, controlling the adhesivity between the interlayer film and a lamination glass member such as a glass plate or the adhesivity between respective layers in the interlayer film is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt included in the interlayer film contain at least one kind of metal among K and Mg.

As the metal salt M, an alkali metal salt of an organic acid having 2 to 16 carbon atoms, and an alkali earth metal salt of an organic acid having 2 to 16 carbon atoms can be used. The metal salt M may include a magnesium carboxylate having 2 to 16 carbon atoms, or a potassium carboxylate having 2 to 16 carbon atoms.

Examples of the magnesium carboxylate with 2 to 16 carbon atoms and the potassium carboxylate with 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in the interlayer film containing the Metal salt M or a layer containing the Metal salt M (a first layer, a second layer, or a third layer) is preferably 5 ppm or more, more preferably 10 ppm or more, further preferably 20 ppm or more, and is preferably 300 ppm or less, more preferably 250 ppm or less, further preferably 200 ppm or less. When the total of the contents of Mg and K is the above lower limit or more and the above upper limit or less, the adhesivity between the interlayer film and a lamination glass member such as a glass plate or the adhesivity between respective layers in the interlayer film can be further well controlled.

### (Ultraviolet ray screening agent)

It is preferred that the interlayer film contain an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, even when the interlayer film and the laminated glass are used for a long period of time, the visible light transmittance becomes further hard to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface may be coated. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray screening performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxalanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of the interlayer film or in 100% by weight of a layer containing the ultraviolet ray screening agent (a first layer, a second layer, or a third layer), the content of the ultraviolet ray screening agent and the content of the benzotriazole compound are preferably 0.1% by weight or more, more preferably 0.2% by weight or more, further preferably 0.3% by weight or more, especially preferably 0.5% by weight or more. In this case, the visible light transmittance becomes still less likely to decrease even when the interlayer film and the laminated glass are used for a long period. In 100% by weight of the interlayer film or in 100% by weight of a layer containing the ultraviolet ray screening agent (a first layer, a second layer, or a third layer), the content of the ultraviolet ray screening agent and the content of the benzotriazole compound are preferably 2.5% by weight or less, more preferably 2% by weight or less, further preferably 1% by weight or less, especially preferably 0.8% by weight or less. Especially, by setting the content of the ultraviolet ray screening agent to be 0.2% by weight or more in 100% by weight of a layer containing the ultraviolet ray screening agent, the visible light transmittance becomes still less likely to decrease even when the interlayer film and the laminated glass are used for a long period.

### (Oxidation inhibitor)

It is preferred that the interlayer film contain an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, and bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis(4,6-di-t-butyl-1-phenyloxy)(2-ethylhexyloxy)phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

With regard to the interlayer film and laminated glass, in order to maintain high visible light transmittance thereof over a long period of time, the content of the oxidation inhibitor is preferably 0.03% by weight or more, more preferably 0.1% by weight or more in 100% by weight of the interlayer film or in 100% by weight of the layer containing the oxidation inhibitor (a first layer, a second layer, or a third layer). Moreover, since an effect commensurate with the addition of an oxidation inhibitor is not attained, it is preferred that the content of the oxidation inhibitor be 2% by weight or less in 100% by weight of the interlayer film or in 100% by weight of a layer containing the oxidation inhibitor.

### (Other ingredients)

Each of the interlayer film, the first layer, the second layer, and the third layer may contain additives such as a coloring agent, a coupling agent, a dispersing agent, a surfactant, a flame retardant, an antistatic agent, an adhesive force adjusting agent other than metal salt, a moisture-resistance agent, a fluorescent brightening agent, and an infrared ray absorber, as necessary. One kind of these additives may be used alone, and two or more kinds thereof may be used in combination.

### (Other details of interlayer film for laminated glass)

The interlayer film may be wound to be formed into a roll body of the interlayer film. The roll body may include a winding core and an interlayer film wound on the outer periphery of the winding core.

The method for producing the interlayer film is not particularly limited.

For the reason of excellent production efficiency of the interlayer film, it is preferred that the first layer and the third layer contain the same polyvinyl acetal resin. For the reason of excellent production efficiency of the interlayer film, it is more preferred that the first layer and the third layer contain the same polyvinyl acetal resin and the same plasticizer. For the reason of excellent production efficiency of the interlayer film, it is further preferred that the first layer and the third layer be formed of the same resin composition.

It is preferred that the interlayer film have protrusions and recesses on at least one surface of the surfaces of both sides. It is more preferred that the interlayer film have protrusions and recesses on surfaces of both sides. Examples of the method for forming the protrusions and recesses include, but are not particularly limited to, a lip emboss method (melt fracture method), an emboss roll method, a calender roll method, and a profile extrusion method, and the like.

A ratio of an average thickness of the first layer to an average thickness of the interlayer film (average thickness of first layer/average thickness of interlayer film) is defined as a ratio (1). A ratio of an average thickness of the third layer to an average thickness of the interlayer film (average thickness of third layer/average thickness of interlayer film) is defined as a ratio (3).

When the ratio (1) is smaller than the ratio (3), a ten-point average roughness Rz of the surface on the side opposite to the second layer of the first layer is preferably 9 um or more, more preferably 12 um or more, further preferably 15 um or more, especially preferably 18 um or more, most preferably 20 um or more. When the ratio (1) is smaller than the ratio (3), a ten-point average roughness Rz of the surface on the side opposite to the second layer of the first layer is preferably 100 µm or less, more preferably 90 um or less, further preferably 80 um or less, especially preferably 70 um or less, most preferably 60 um or less. When the ten-point average roughness Rz is the above lower limit or more and the above upper limit or less, it is possible to suppress the self adhesion of the interlayer film during preparation of the interlayer film, during storage of the interlayer film and during preparation of a laminated glass using the interlayer film.

When the ratio (3) is smaller than the ratio (1), a ten-point average roughness Rz of the surface on the side opposite to the second layer of the third layer is preferably 9 um or more, more preferably 12 um or more, further preferably 15 um or more, especially preferably 18 um or more, most preferably 20 um or more. When the ratio (3) is smaller than the ratio (1), a ten-point average roughness Rz of the surface on the side opposite to the second layer of the first layer is preferably 100 µm or less, more preferably 90 um or less, further preferably 80 um or less, especially preferably 70 um or less, most preferably 60 um or less. When the ten-point average roughness Rz is the above lower limit or more and the above upper limit or less, it is possible to suppress the self adhesion of the interlayer film during preparation of the interlayer film, during storage of the interlayer film and during preparation of a laminated glass using the interlayer film.

When the ratio (1) and the ratio (3) are the same, each of the ten-point average roughness Rz of the surface on the side opposite to the second layer of the first layer and the ten-point average roughness Rz of the surface on the side opposite to the second layer of the third layer is preferably 9 um or more, more preferably 12 um or more, further preferably 15 um or more, especially preferably 18 um or more, most preferably 20 um or more. When the ratio (1) and the ratio (3) are the same, each of the ten-point average roughness Rz of the surface on the side opposite to the second layer of the first layer and the ten-point average roughness Rz of the surface on the side opposite to the second layer of the third layer is preferably 100 µm or less, more preferably 90 um or less, further preferably 80 um or less, especially preferably 70 um or less, most preferably 60 um or less. When the ten-point average roughness Rz is the above lower limit or more and the above upper limit or less, it is possible to suppress the self adhesion of the interlayer film during preparation of the interlayer film, during storage of the interlayer film and during preparation of a laminated glass using the interlayer film.

The ten-point average roughness Rz is measured in accordance with JIS B0601:1994. As a measuring device for measuring ten-point average roughness Rz, for example, "Surfcorder SE300" available from Kosaka Laboratory Ltd. may be used.

### (Laminated glass)

The laminated glass according to the present invention includes a first lamination glass member, a second lamination glass member and the aforementioned interlayer film for laminated glass. In the laminated glass according to the present invention, the above-described interlayer film for laminated glass is arranged between the first lamination glass member and the second lamination glass member.

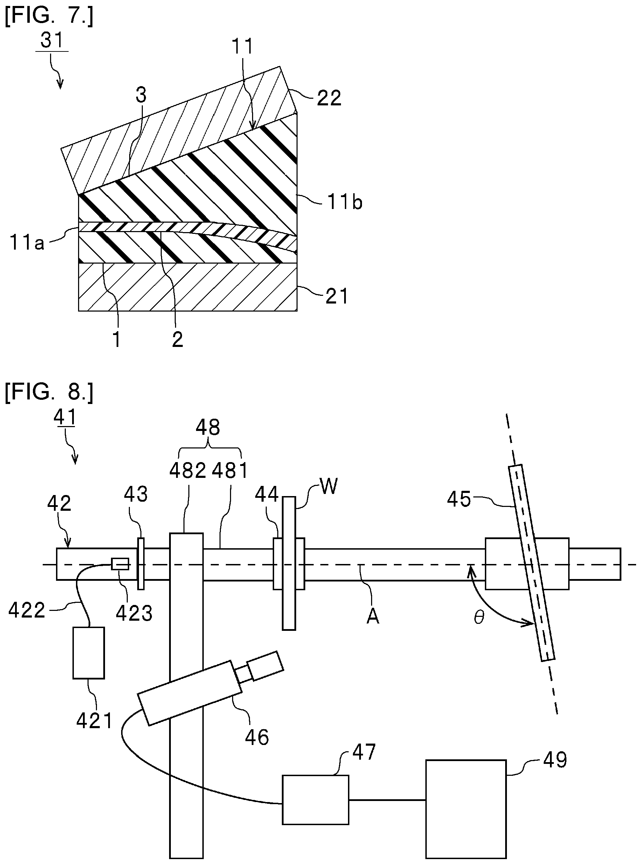

Fig. 7 is a sectional view schematically showing an example of laminated glass prepared with the interlayer film for laminated glass shown in Fig. 1.

A laminated glass 31 shown in Fig. 7 includes a first lamination glass member 21, a second lamination glass member 22 and the interlayer film 11. The interlayer film 11 is arranged between the first lamination glass member 21 and the second lamination glass member 22 to be sandwiched therebetween. The first lamination glass member 21 is layered on a first surface (one surface) of the interlayer film 11. The second lamination glass member 22 is layered on a second surface (other surface) opposite to the first surface of the interlayer film 11. The first lamination glass member 21 is layered on the outer surface of the first layer 1 in the interlayer film 11. The second lamination glass member 22 is layered on the outer surface of the third layer 3 in the interlayer film 1.

It is preferred that the first lamination glass member be the first glass plate. It is preferred that the second lamination glass member be the second glass plate.

Examples of the first and second lamination glass members include a glass plate, and a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate including a glass plate, and it is preferred that at least one glass plate be used. It is preferred that each of the first lamination glass member and the second lamination glass member be a glass plate or a PET film, and the laminated glass include a glass plate as at least one of the first lamination glass member and the second lamination glass member. It is especially preferred that both of the first and second lamination glass members be glass plates.

Examples of the glass plate include a sheet of inorganic glass and a sheet of organic glass. Examples of the inorganic glass include float plate glass, heat rayabsorbing plate glass, heat ray-reflecting plate glass, polished plate glass, figured glass, wired plate glass, green glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of each of the first lamination glass member and the second lamination glass member is preferably 1 mm or more, and is preferably 5 mm or less, more preferably 3 mm or less. Moreover, when the lamination glass member is a glass plate, the thickness of the glass plate is preferably 0.5 mm or more, more preferably 0.7 mm or more, and is preferably 5 mm or less, more preferably 3 mm or less. When the lamination glass member is a PET film, the thickness of the PET film is preferably 0.03 mm or more and is preferably 0.5 mm or less.

The method for producing the laminated glass is not particularly limited. First, the interlayer film is sandwiched between the first lamination glass member and the second lamination glass member to obtain a laminate. Then, for example, by passing the obtained laminate through pressure rolls or subjecting the obtained laminate to decompression suction in a rubber bag, the air remaining between the first and the second lamination glass members and the interlayer film is removed. Then, the laminate is preliminarily bonded together at about 70°C to 110°C to obtain a preliminarily press-bonded laminate. Next, by putting the preliminarily press-bonded laminate into an autoclave or by pressing the laminate, the laminate is press-bonded at about 120°C to 150°C and under a pressure of 1 MPa to 1.5 MPa. In this way, laminated glass can be obtained.

Each of the interlayer film and the laminated glass can be used for automobiles, railway vehicles, aircraft, ships, and buildings and the like. Each of the interlayer film and the laminated glass can also be used for applications other than these applications. It is preferred that the interlayer film and the laminated glass be an interlayer film and laminated glass for vehicles or for buildings respectively, and it is more preferred that the interlayer film and the laminated glass be an interlayer film and laminated glass for vehicles respectively. Each of the interlayer film and the laminated glass can be used for a windshield, side glass, rear glass, roof glass or glass for backlight of an automobile, and the like. The interlayer film and the laminated glass are suitably used for automobiles. The interlayer film is suitably used for obtaining laminated glass for an automobile.

Hereinafter, the present invention will be described in more detail with reference to examples and comparative examples. The present invention is not limited only to these examples.

In polyvinyl acetal resins used, n-butyraldehyde that has 4 carbon atoms is used for the acetalization. With regard to the polyvinyl acetal resin, the acetalization degree (the butyralization degree), the acetylation degree and the content of the hydroxyl group were measured by a method conforming to JIS K6728 "Testing methods for polyvinyl butyral". In this connection, even in the cases of being measured according to ASTM D1396-92, numerical values similar to those obtained by a method conforming to JIS K6728 "Testing methods for polyvinyl butyral" were exhibited.

Tinuvin 326 used in Examples and Comparative Examples is (2-(2'-hydroxy-3'-t-butyl-5-methylphenyl)-5-chlorobenzotriazole ("Tinuvin 326" available from BASF Japan Ltd.). Also, BHT used in Examples and Comparative Examples is 2,6-di-t-butyl-p-cresol.

### (Example 1)

### Preparation of resin composition for forming second layer:

The following ingredients were mixed, and kneaded sufficiently with a mixing roll to obtain a composition for forming a second layer.

Polyvinyl acetal resin (average polymerization degree: 3000, content of hydroxyl group: 22% by mole, acetylation degree: 13% by mole, acetalization degree: 65% by mole): 100 parts by weight
Triethylene glycol di-2-ethylhexanoate (3GO): 68.8 parts by weight
Tinuvin 326 in an amount of 0.2% by weight in the obtained second layer
BHT in an amount of 0.2% by weight in the obtained second layer

### Preparation of resin composition for forming first layer and third layer:

The following ingredients were mixed, and kneaded sufficiently with a mixing roll to obtain a resin composition for forming a first layer and a third layer.

Polyvinyl acetal resin (average polymerization degree: 1700, content of hydroxyl group: 30.5% by mole, acetylation degree: 1% by mole, acetalization degree: 68.5% by mole): 100 parts by weight
Triethylene glycol di-2-ethylhexanoate (3GO): 38.6 parts by weight
Tinuvin 326 in an amount of 0.2% by weight in the obtained first layer and third layer
BHT in an amount of 0.2% by weight in the obtained first layer and third layer

### Preparation of interlayer film:

The resin composition for forming a second layer, and the resin composition for forming first and third layers were coextruded by using a co-extruder. The pressure distribution at the time of joining the resin compositions was adjusted. In this manner, an interlayer film having a three-layer structure (first layer/second layer/third layer) in which the thickness of the other end is larger than the thickness of the one end (interlayer film having a shape shown in Table 4) was obtained.

### (Examples 2 to 12)

An interlayer film having a three-layer structure (first layer/second layer/third layer) in which the thickness of the other end is larger than the thickness of the one end was obtained in the same manner as that in Example 1 except that the configuration of the interlayer film was changed as shown in Tables 4 to 7.

### (Example 13)

### (Synthesis of polyvinyl acetate (1))

A glass polymerization vessel equipped with a reflux condenser, a dropping funnel, a thermometer, and a nitrogen inlet was prepared. This polymerization vessel was charged with 100 parts by weight of vinyl acetate monomer, 1.0 part by weight of 3-methyl-3-buten-1-ol, and 3.8 parts by weight of methanol, and heated and stirred, and the interior of the polymerization vessel was replaced by nitrogen. Then the inner temperature of the polymerization vessel was controlled to 60°C, and 0.02 parts by weight of tertbutylperoxy neodecanate which is a polymerization initiator, 150 parts by weight of vinyl acetate monomer, and 1.5 parts by weight of 3-methyl-3-buten-1-ol were dropped over 4 hours, and polymerized for 2 hours after end of the dropping, and thus a solution containing polyvinyl acetate was obtained. The solution was dried for 3 hours in an oven at 110°C to obtain polyvinyl acetate (1).

### Preparation of resin composition for forming second layer:

The following ingredients were mixed, and kneaded sufficiently with a mixing roll to obtain a composition for forming a second layer.

### Polyvinyl acetate (1) 100 parts by weight

Plasticizer (Bis(2-butoxyethyl) adipate (D931)) 80 parts by weight
Tinuvin 326 in an amount of 0.2% by weight in the obtained second layer
BHT in an amount of 0.2% by weight in the obtained second layer

### Preparation of resin composition for forming first layer and third layer:

The following ingredients were mixed, and kneaded sufficiently with a mixing roll to obtain a resin composition for forming a first layer and a third layer.

Polyvinyl acetal resin (average polymerization degree: 1700, content of hydroxyl group: 31% by mole, butyralization degree: 68% by mole, acetylation degree: 1% by mole): 100 parts by weight
Plasticizer (Bis(2-butoxyethyl) adipate (D931)) 35 parts by weight
Metal salt M (Mg mixture) in such an amount that the content of Mg is 70 ppm in the obtained first layer and third layer
Tinuvin 326 in an amount of 0.2% by weight in the obtained first layer and third layer
BHT in an amount of 0.2% by weight in the obtained first layer and third layer

### Preparation of interlayer film:

The resin composition for forming a second layer, and the resin composition for forming first and third layers were coextruded by using a co-extruder. The pressure distribution at the time of joining the resin compositions was adjusted. In this manner, an interlayer film having a three-layer structure (first layer/second layer/third layer) in which the thickness of the other end is larger than the thickness of the one end (interlayer film having a shape shown in Table 7) was obtained.

### (Comparative Example 1)

The following ingredients were mixed, and kneaded sufficiently with a mixing roll to obtain a composition for forming a first layer.

### Polyvinyl acetal resin (average polymerization degree: 1700, content of hydroxyl group: 30.5% by mole, acetylation degree: 1% by mole, acetalization degree: 68.5% by mole): 100 parts by weight

Triethylene glycol di-2-ethylhexanoate (3GO): 40 parts by weight
Tinuvin 326 in an amount of 0.2% by weight in the obtained first layer
BHT in an amount of 0.2% by weight in the obtained first layer

### Preparation of interlayer film:

The resin composition for forming a first layer was extruded with an extruder to obtain an interlayer film having a one-layer structure in which the thickness of the other end is larger than the thickness of the one end (interlayer film having the shape shown in Table 1).

### (Comparative Example 2)

An interlayer film having a one-layer structure in which the thickness of the other end is larger than the thickness of the one end was obtained in the same manner as that in Comparative Example 1 except that the configuration of the interlayer film was changed as shown in Table 1.

### (Comparative Examples 3 to 9)

An interlayer film having a three-layer structure (first layer/second layer/third layer) in which the thickness of the other end is larger than the thickness of the one end was obtained in the same manner as that in Example 1 except that the configuration of the interlayer film was changed as shown in Tables 2, 3. The interlayer films obtained in Comparative Examples 3 to 9 do not include a layer in which the thickness at the other end is smaller than the thickness at the one end.

### (Comparative Example 10)

### Preparation of resin composition for forming second layer:

The following ingredients were mixed, and kneaded sufficiently with a mixing roll to obtain a composition for forming a second layer.
Polyvinyl acetate (1) 100 parts by weight
Plasticizer (Bis(2-butoxyethyl) adipate (D931)) 80 parts by weight
Tinuvin 326 in an amount of 0.2% by weight in the obtained second layer
BHT in an amount of 0.2% by weight in the obtained second layer

### Preparation of resin composition for forming first layer and third layer:

The following ingredients were mixed, and kneaded sufficiently with a mixing roll to obtain a resin composition for forming a first layer and a third layer.

### Polyvinyl acetal resin (average polymerization degree: 1700, content of hydroxyl group: 31% by mole, butyralization degree: 68% by mole, acetylation degree: 1% by mole): 100 parts by weight

Plasticizer (Bis(2-butoxyethyl) adipate (D931)) 35 parts by weight
Metal salt M (Mg mixture) in such an amount that the content of Mg is 70 ppm in the obtained first layer and third layer
Tinuvin 326 in an amount of 0.2% by weight in the obtained first layer and third layer
BHT in an amount of 0.2% by weight in the obtained first layer and third layer

### Preparation of interlayer film:

The resin composition for forming a second layer, and the resin composition for forming first and third layers were co-extruded using a co-extruder to obtain an interlayer film having a three-layer structure (first layer/second layer/third layer) in which the thickness of the other end is larger than the thickness of the one end. The interlayer film obtained in Comparative Example 10 does not include a layer in which the thickness at the other end is smaller than the thickness at the one end.

### (Evaluation)

### (1) Thicknesses of interlayer film and layers constituting interlayer film

Thicknesses of the obtained interlayer film and layers constituting the interlayer film were measured with a contact-type thickness tester "TOF-4R" available from Yamabun Electronics Co., Ltd. Measurement of thickness was conducted such that the distance was the shortest from the one end toward the other end at a film conveyance speed of 2.15 mm/minute to 2.25 mm/minute.

Also, from the measurement results, the following absolute values of differences were calculated.
Absolute value of difference between maximum value of T₁/T and minimum value of T₁/T
Absolute value of difference between maximum value of T₃/T and minimum value of T₃/T
T is a thickness of the interlayer film at a predetermined position, and T₁ and T₃ are thicknesses of the first layer and the third layer at the same position as the predetermined position.

### (2) Ten-point average roughness Rz

A ratio (1) of the average thickness of the first layer to the average thickness of the interlayer film (average thickness of first layer/average thickness of interlayer film) and a ratio (3) of the average thickness of the third layer to the average thickness of the interlayer film (average thickness of third layer/average thickness of interlayer film) were calculated. Of the first layer and the third layer, a ten-point average roughness Rz of the surface on the side opposite to the second layer of the layer having a smaller ratio of thickness to the interlayer film was measured in accordance with JISB0601:1994. As a measuring device, "Surfcorder SE300" available from Kosaka Laboratory Ltd. was used.

### (3) Optical strain

### (3-1) Preparation of laminated glass

The obtained interlayer film was sandwiched between two sheets of clear glass conforming to JISR3202:1996 having a length of 15 cm, a width of 30 cm, and a thickness of 2.5 mm to obtain a laminate. The obtained laminate was put into a rubber bag, and the rubber bag was connected with a suction decompressor. The laminate was preliminarily press-bonded together by heating such that the temperature of the laminate was 70°C while the laminate was kept under a reduced pressure of 16 kPa for 10 minutes. After the pressure was recovered to the atmospheric pressure, the preliminarily press-bonded laminate was press-bonded under conditions of 140°C and a pressure of 1300 kPa for 10 minutes in an autoclave. After the press-bonding, the conditions were recovered to 50°C and the atmospheric pressure to obtain a laminated glass.

### (3-2) Measurement of optical strain

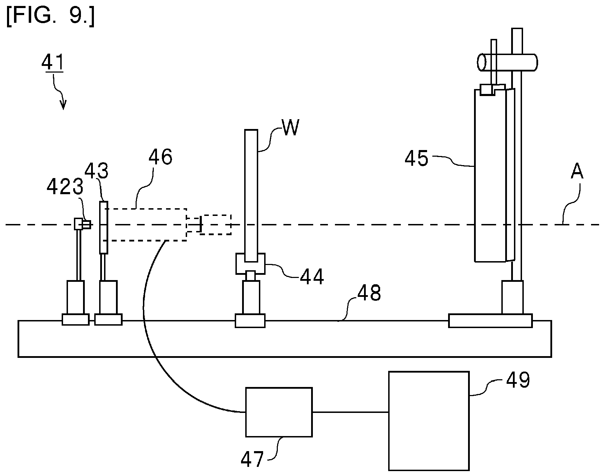

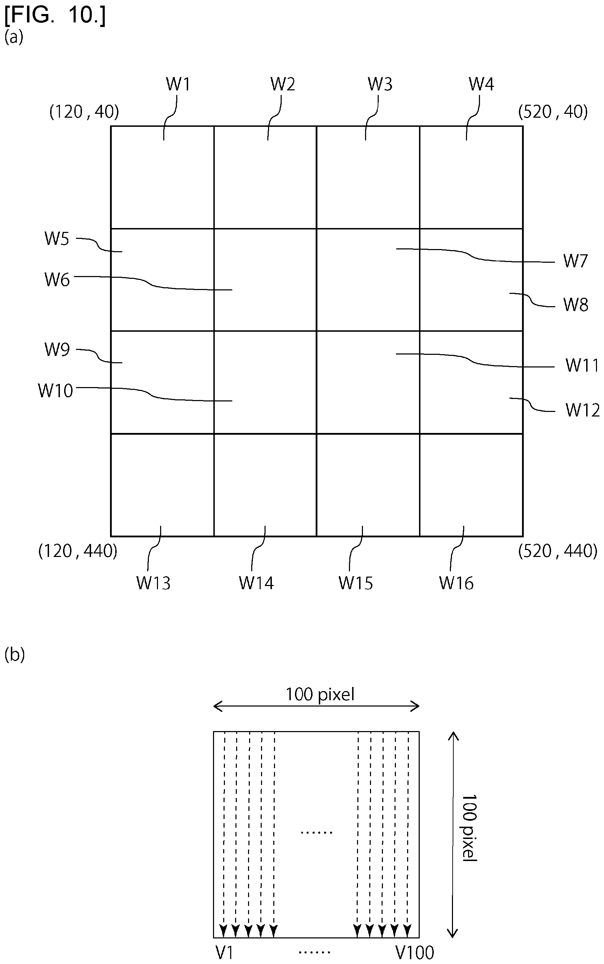

An optical strain inspection apparatus shown in Fig. 8 and Fig. 9 was prepared. Fig. 8 is a plan view schematically showing an optical strain inspection apparatus for use in measurement of optical strain. Fig. 9 is a front view schematically showing an optical strain inspection apparatus for use in measurement of optical strain. Figs. 10(a) and (b) are views for illustrating a processing operation in an image processing part.

An optical strain inspection apparatus 41 is an apparatus for measuring an optical strain value of a measuring object W. The optical strain inspection apparatus 41 includes a light source unit 42, a slit part 43, a measuring object placing part 44, a projection plane 45, an image inputting part 46, an image processing part 47, a pedestal 48, and an evaluation part 49. In Fig. 8 and Fig. 9, the measuring object W is placed on the measuring object placing part 44.

The light source unit 42 includes a light emitting part 421, an optical fiber 422, and an irradiation port 423. The irradiation light emitted by the light emitting part 421 is released from the irradiation port 423 in the direction toward the slit part 43 through inside the optical fiber 422. As the light emitting part 421, a halogen lamp ("EYE DICHO-COOL HALOGEN (15 V 100 W)" available from IWASAKI ELECTRIC CO., LTD.) was used.

The pedestal 48 includes a pedestal body 481 and an arm 482. The image inputting part 46 is placed on the arm 482.

The irradiation port 423, the slit part 43, the measuring object placing part 44 and the projection plane 45 are movable on the pedestal 48 in the direction of the optical axis A.

The slit part 43 has a slit in the center part. The irradiation light released from the light source unit 42 passes through the slit of the slit part 43 and reaches the measuring object W.

The irradiation light having penetrated the measuring object W is projected on the projection plane 45. The projection plane 45 can be installed while it is inclined at an angle θ relative to an optical axis A. As the projection plane 45, white paper was used.

The image inputting part 46 photographs the projection plane 45, and converts the contrast of the photographic image into a signal, and generates a gray image. As the image inputting part, a CCD camera ("XC-ST70" available from Sony Corporation) was used.

The image processing part 47 detects an optical strain of the measuring object W according to a degree of variation in shading of the gray image. A variance of density values between pixels of the gray image is outputted. The evaluation part 49 compares the variance calculated by the image processing part 47, and a variance of a predetermined allowable range, and evaluates the optical strain of the measuring object W.

The image processing part 47 converts each pixel of the gray image to a pixel value of 0 to 255 according to the shading of the gray image. As shown in Fig. 10(a), a region of 400 pixels × 400 pixels formed by connecting four points of pixel coordinates (120, 40), (520, 40), (120, 440), (520, 440) was divided into 16 windows in total (Windows W1 to W16) each containing 100 pixels × 100 pixels. The division into the 16 windows was performed so that they did not overlap with one another.

Fig. 10(b) shows only one window in an enlarged scale. For 100 pixels in the same column of one window (broken arrow in Fig. 10(b)), a "variance of pixel values" was calculated. For each of the first column to the one hundredth column of the window, a "variance of pixel values" was calculated. In the first column of the window, variance of pixel values V1 is calculated. In the second column of the window, variance of pixel values V2 is calculated. Likewise, variances of pixel values V3 to V100 are calculated. One hundred values of "variance of pixel values" (variances V1 to V100) are obtained in one window. An average value of these 100 values of "variance of pixel values" was determined as an "optical strain of a window".

For each of the 16 windows, an "optical strain of a window" was calculated. An average "optical strain of a window" was determined, as an "optical strain of a measuring object", from the "optical strain of a window" determined in each of the 16 windows.

As the measuring object W, two measuring objects, namely, the obtained laminated glass and the laminated glass for calibration were used. The laminated glass for calibration is a laminated glass obtained by arranging a monolayer interlayer film for calibration having a visible light transmittance of 88% between two sheets of clear float glass having a thickness of 2.5 mm. The visible light transmittance of the monolayer interlayer film for calibration is measured at a wavelength of 380 nm to 780 nm by using a spectrophotometer (for example, "U-4100" available from Hitachi High-Tech Corporation) in accordance with JISR3211:1998.

The laminated glass for calibration is a laminated glass prepared with the monolayer interlayer film for calibration in the following manner.

The monolayer interlayer film for calibration was sandwiched between two sheets of clear glass conforming to JISR3202:1996 having a length of 15 cm, a width of 30 cm, and a thickness of 2.5 mm to obtain a laminate. The obtained laminate was put into a rubber bag, and the rubber bag was connected with a suction decompressor. The laminate was preliminarily press-bonded together by heating such that the temperature of the laminate was 70°C while the laminate was kept under a reduced pressure of 16 kPa for 10 minutes. After the pressure was recovered to the atmospheric pressure, the preliminarily press-bonded laminate was press-bonded under conditions of 140°C and a pressure of 1300 kPa for 10 minutes in an autoclave. After the press-bonding, the conditions were recovered to 50°C and the atmospheric pressure to obtain the laminated glass for calibration.

The positions of the irradiation port, the slit part, the measuring object placing part, the projection plane, and the image inputting part and the like, the shape and the size of the slit, the illuminance of the light source, the angle θ between the optical axis and the projection plane, and the like were adjusted so that the optical strain value in a condition that no measuring object was placed was 1.30 and the optical strain value of the laminated glass for calibration was 1.14. The condition that no measuring object is placed means the state that no object is placed on the measuring object placing part. An optical strain value of the obtained laminated glass was measured by using the optical strain inspection apparatus that was adjusted so that an optical strain value in a condition that no measuring object was placed was 1.30 and an optical strain value of the laminated glass for calibration was 1.14.

### [Criteria for judgement in optical strain]

∘: optical strain value is 1.9 or less
△: optical strain value is more than 1.9 and 3 or less
×: optical strain value is more than 3

### (4) Sound insulating property

### (4-1) Preparation of laminated glass

The obtained interlayer film was sandwiched between two sheets of clear glass conforming to JISR3202:1996 having a thickness of 2 mm to obtain a laminate. The obtained laminate was put into a rubber bag and the inside thereof is degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave to obtain a laminated glass having a size of 950 mm long and 1500 mm wide.

### (4-2) Natural frequency (sound insulating property in low-frequency region)

Using an optical 3D digitizer ("FP7000" available from Boulder Innovation Group, Inc.), and analysis software ("BK Connect" available from Spectris Co., Ltd.), 3D geometry data of the obtained laminated glass was made. In the directions of the 3D geometry data corresponding to the longitudinal direction and the widthwise direction of the laminated glass, the first surface of the laminated glass was divided into regions such that each region had a length of 5 cm or less and a width of 5 cm or less. The longitudinal direction and the widthwise direction in the region correspond to the longitudinal direction and the widthwise direction of the laminated glass.

A plurality of the regions (the region having a length of 5 cm or less and a width of 5 cm or less) exist on the first surface of the laminated glass. Since the laminated glass has a size of 950 mm in length and 1500 mm in width, 570 regions are obtained when the laminated glass is divided such that each region has a length of 5 cm and a width of 5 cm.

An accelerometer ("352C68" available from PCB Piezotronics, Inc.) was prepared. On the first surface of the laminated glass, a longitudinal length of the laminated glass is defined as L1, a widthwise length is defined as L2, and one vertex among four vertexes of the first surface is defined as vertex O. On the first surface of the laminated glass, accelerometers were installed at three positions: a position of 0.3L1 in the longitudinal direction and 0.3L2 in the widthwise direction from the vertex O, a position of 0.7L1 in the longitudinal direction and 0.5L2 in the widthwise direction from the vertex O, and a position of 0.6L1 and 0.8L2 in the widthwise direction from the vertex O. Since the laminated glass has a size of 950 mm long and 1500 mm wide, the accelerometers were installed at three positions: a position of 285 mm in the longitudinal direction and 450 mm in the widthwise direction from the vertex O, a position of 665 mm in the longitudinal direction and 750 mm in the widthwise direction from the vertex O, and a position of 570 mm and 1200 mm in the widthwise direction from the vertex O. The laminated glass on which the accelerometers were installed was brought into a Free-Free condition. As a method for bringing into a Free-Free condition, a method of suspending the laminated glass on which the accelerometers are installed with soft rubber, or a method of placing the laminated glass on soft cushion, and the like can be recited. In the present example, the laminated glass was brought into a Free-Free condition by the method of suspending with soft rubber. In each of the above regions, a middle position in the longitudinal direction and a middle position in the widthwise direction of the divided region in the first surface of the laminated glass was exited with an impact hammer, and a transfer function (response (m/s²) to excitation (F)) was calculated. The measurement of natural frequency was conducted by experimental modal analysis. The obtained transfer function was curve-fitted with Polynominal-Z approach, and each natural frequency Xn (Hz) was calculated. n denotes the order of the mode of vibration. For example, X1 denotes a natural frequency of primary vibration mode. For natural frequencies X1 to X10 corresponding to the primary to tenth vibration modes, absolute values Y1 to Y10 of difference in natural frequency between a referential Comparative Example and Example were determined with reference to Comparative Example having the same wedge angle (θ). For example, absolute value Y1 is an absolute value of difference between natural frequency X1 of a referential Comparative Example, and natural frequency X1 of Example.

Sound insulating property in a low-frequency region was judged on the basis of the following criteria for judgement.

### [Criteria for judgment in natural frequency (sound insulating property in low-frequency region)]

∘: at least one of absolute value Y1 to absolute value Y10 is more than 2 Hz
×: all of absolute value Y1 to absolute value Y10 are 2 Hz or less

### (4-3) STL (sound insulating property in high-frequency region)

STL (sound insulating property in high-frequency region) was evaluated in accordance with JISA1441-1 using the obtained laminated glass. As the sound pressure of the sound entering the sample at the time of measurement, an average sound pressure of the sound pressures measured with five microphones installed in a reverberation chamber was used. For the sound transmitted from the sample, an average sound intensity was measured at a distance of 130 mm from the sample surface as a measurement face in a hemi-anechoic chamber on the sound receiving side. The sound intensity was evaluated by scanning using an intensity probe microphone. The sound insulating property in a high-frequency region was judged on the basis of the following criteria for judgment from four STL values of 2500 Hz, 3150 Hz, 4000 Hz, and 5000 Hz which are 1/3 octave band frequencies

### [Criteria for judgment in STL (sound insulating property in high-frequency region)]

∘: all four STL values are 32 dB or more
×: at least one of four STL values is less than 32 dB

Configurations of interlayer films and results are shown in the following Tables 1 to 7.

In Tables 1 to 7, the meanings of *1, *2, and *3 are as follows. *1: "(T: thickness of interlayer film at predetermined position, T1: thickness of first layer at same position as predetermined position)" *2: "(T: thickness of interlayer film at predetermined position, T3: thickness of third layer at same position as predetermined position)" *3: "(ten-point average roughness Rz (um) of surface on opposite side to second layer of layer having smaller ratio of thickness to interlayer film of first layer and third layer)"

**[Table 1]**

| | | Comparative Example 1 | Comparative Example 2 |
|---|---|---|---|
| Sectional shape of interlayer film | | - | - |
| Number of layers | | 1 | 1 |
| Wedge angle θ of interlayer film as a whole (mrad) | | 0.4 | 0.8 |
| First layer | Content of thermoplastic resin (parts by weight) | 100 | 100 |
| | Content of plasticizer (parts by weight) | 40 | 40 |
| Second layer | Content of thermoplastic resin (parts by weight) | - | - |
| | Content of plasticizer (parts by weight) | - | - |
| Third layer | Content of thermoplastic resin (parts by weight) | - | - |
| | Content of plasticizer (parts by weight) | - | - |
| Interlayer film | Distance L between one end and other end (mm) | 1000 | 1000 |
| | Thickness at one end (µm) | 780 | 780 |
| | Thickness at other end (µm) | 1180 | 1580 |
| First layer | Distance L1 between one end and other end (mm) | 1000 | 1000 |
| | Thickness at one end (µm) | 780 | 780 |
| | Thickness at other end (µm) | 1180 | 1580 |
| Second layer | Distance L2 between one end and other end (mm) | - | - |
| | Thickness at one end (µm) | - | - |
| | Thickness at other end (µm) | - | - |
| Third layer | Distance L3 between one end and other end (mm) | - | - |
| | Thickness at one end (µm) | - | - |
| | Thickness at other end (µm) | - | - |
| Absolute value of difference between maximum value of T₁/T and minimum value of T₁/T *1 | | - | - |
| Absolute value of difference between maximum value of T₃/T and minimum value of T₃/T *2 | | - | - |
| Ten-point average roughness Rz (µm) *3 | | - | - |
| Optical strain | | - | - |
| Sound insulating property | Natural frequency (sound insulating property in low-frequency region) | - | - |
| | STL (sound insulating property in high-frequency region) | × | × |

**[Table 2]**

| | | Comparative Example 3 | Comparative Example 4 | Comparative Example 5 | Comparative Example 6 |
|---|---|---|---|---|---|
| Sectional shape of interlayer film | | - | - | - | - |
| Number of layers | | 3 | 3 | 3 | 3 |
| Wedge angle θ of interlayer film as a whole (mrad) | | 0.4 | 0.6 | 0.8 | 0.9 |
| First layer | Content of thermoplastic resin (parts by weight) | 100 | 100 | 100 | 100 |
| | Content of plasticizer (parts by weight) | 38.6 | 38.6 | 38.6 | 38.6 |
| Second layer | Content of thermoplastic resin (parts by weight) | 100 | 100 | 100 | 100 |
| | Content of plasticizer (parts by weight) | 68.8 | 68.8 | 68.8 | 68.8 |
| Third layer | Content of thermoplastic resin (parts by weight) | 100 | 100 | 100 | 100 |
| | Content of plasticizer (parts by weight) | 38.6 | 38.6 | 38.6 | 38.6 |
| Interlayer film | Distance L between one end and other end (mm) | 1000 | 1000 | 1000 | 1000 |
| | Thickness at one end (µm) | 780 | 780 | 780 | 780 |
| | Thickness at other end (µm) | 1180 | 1380 | 1580 | 1680 |
| First layer | Distance L1 between one end and other end (mm) | 1000 | 1000 | 1000 | 1000 |
| | Thickness at one end (µm) | 340 | 340 | 340 | 340 |
| | Thickness at other end (µm) | 540 | 640 | 740 | 790 |
| Second layer | Distance L2 between one end and other end (mm) | 1000 | 1000 | 1000 | 1000 |
| | Thickness at one end (µm) | 100 | 100 | 100 | 100 |
| | Thickness at other end (µm) | 100 | 100 | 100 | 100 |
| Third layer | Distance L3 between one end and other end (mm) | 1000 | 1000 | 1000 | 1000 |
| | Thickness at one end (µm) | 340 | 340 | 340 | 340 |
| | Thickness at other end (µm) | 540 | 640 | 740 | 790 |
| Absolute value of difference between maximum value of T₁/T and minimum value of T₁/T *1 | | 0.022 | 0.028 | 0.032 | 0.034 |
| Absolute value of difference between maximum value of T₃/T and minimum value of T₃/T *2 | | 0.022 | 0.028 | 0.032 | 0.034 |
| Ten-point average roughness Rz (µm) *3 | | 7 | 5 | 6 | 8 |
| Optical strain | | ○ | ○ | ○ | ○ |
| Sound insulating property | Natural frequency (sound insulating property in low-frequency region) | Reference | Reference | Reference | Reference |
| | STL (sound insulating property in high-frequency region) | ○ | ○ | ○ | ○ |

**[Table 3]**

| | | Comparative Example 7 | Comparative Example 8 | Comparative Example 9 | Comparative Example 10 |
|---|---|---|---|---|---|
| Sectional shape of interlayer film | | - | - | - | - |
| Number of layers | | 3 | 3 | 3 | 3 |
| Wedge angle θ of interlayer film as a whole (mrad) | | 1.1 | 0.5 | 0.7 | 0.63 |
| First layer | Content of thermoplastic resin (parts by weight) | 100 | 100 | 100 | 100 |
| | Content of plasticizer (parts by weight) | 38.6 | 38.6 | 38.6 | 35 |
| Second layer | Content of thermoplastic resin (parts by weight) | 100 | 100 | 100 | 100 |
| | Content of plasticizer (parts by weight) | 68.8 | 68.8 | 68.8 | 80 |
| Third layer | Content of thermoplastic resin (parts by weight) | 100 | 100 | 100 | 100 |
| | Content of plasticizer (parts by weight) | 38.6 | 38.6 | 38.6 | 35 |
| Interlayer film | Distance L between one end and other end (mm) | 1000 | 1000 | 1000 | 1000 |
| | Thickness at one end (µm) | 780 | 780 | 780 | 700 |
| | Thickness at other end (µm) | 1880 | 1280 | 1480 | 1330 |
| First layer | Distance L1 between one end and other end (mm) | 1000 | 1000 | 1000 | 1000 |
| | Thickness at one end (µm) | 340 | 340 | 340 | 300 |
| | Thickness at other end (µm) | 890 | 590 | 690 | 615 |
| Second layer | Distance L2 between one end and other end (mm) | 1000 | 1000 | 1000 | 1000 |
| | Thickness at one end (µm) | 100 | 100 | 100 | 100 |
| | Thickness at other end (µm) | 100 | 100 | 100 | 100 |
| Third layer | Distance L3 between one end and other end (mm) | 1000 | 1000 | 1000 | 1000 |
| | Thickness at one end (µm) | 340 | 340 | 340 | 340 |
| | Thickness at other end (µm) | 890 | 590 | 690 | 615 |
| Absolute value of difference between maximum value of T₁/T and minimum value of T₁/T *1 | | 0.038 | 0.025 | 0.030 | 0.034 |
| Absolute value of difference between maximum value of T₃/T and minimum value of T₃/T *2 | | 0.038 | 0.025 | 0.030 | 0.023 |
| Ten-point average roughness Rz (µm) *3 | | 7 | 8 | 7 | 7 |
| Optical strain | | ○ | ○ | ○ | ○ |
| Sound insulating property | Natural frequency (sound insulating property in low-frequency region) | Reference | Reference | Reference | Reference |
| | STL (sound insulating property in high-frequency region) | ○ | ○ | ○ | ○ |

**[Table 4]**

| | | Example 1 | Example 2 | Example 3 | Example 4 |
|---|---|---|---|---|---|
| Sectional shape of interlayer film | | Fig. 1 | Fig. 1 | Fig. 1 | Fig. 1 |
| Number of layers | | 3 | 3 | 3 | 3 |
| Wedge angle θ of interlayer film as a whole (mrad) | | 0.4 | 0.6 | 0.8 | 0.9 |
| First layer | Content of thermoplastic resin (parts by weight) | 100 | 100 | 100 | 100 |
| | Content of plasticizer (parts by weight) | 38.6 | 38.6 | 38.6 | 38.6 |
| Second layer | Content of thermoplastic resin (parts by weight) | 100 | 100 | 100 | 100 |
| | Content of plasticizer (parts by weight) | 68.8 | 68.8 | 68.8 | 68.8 |
| Third layer | Content of thermoplastic resin (parts by weight) | 100 | 100 | 100 | 100 |
| | Content of plasticizer (parts by weight) | 38.6 | 38.6 | 38.6 | 38.6 |
| Interlayer film | Distance L between one end and other end (mm) | 1000 | 1000 | 1000 | 1000 |
| | Thickness at one end (µm) | 780 | 780 | 780 | 780 |
| | Thickness at other end (µm) | 1180 | 1380 | 1580 | 1680 |
| First layer | Distance L1 between one end and other end (mm) | 1000 | 1000 | 1000 | 1000 |
| | Thickness at one end (µm) | 341 | 341 | 341 | 390 |
| | Thickness at other end (µm) | 283 | 276 | 316 | 336 |
| Second layer | Distance L2 between one end and other end (mm) | 1000 | 1000 | 1000 | 1000 |
| | Thickness at one end (µm) | 98 | 98 | 98 | 98 |
| | Thickness at other end (µm) | 148 | 173 | 198 | 210 |
| Third layer | Distance L3 between one end and other end (mm) | 1000 | 1000 | 1000 | 1000 |
| | Thickness at one end (µm) | 341 | 341 | 341 | 293 |
| | Thickness at other end (µm) | 749 | 932 | 1067 | 1134 |
| Absolute value of difference between maximum value of T₁/T and minimum value of T₁/T *1 | | 0.198 | 0.238 | 0.238 | 0.300 |
| Absolute value of difference between maximum value of T₃/T and minimum value of T₃/T *2 | | 0.198 | 0.238 | 0.238 | 0.300 |
| Ten-point average roughness Rz (µm) *3 | | 23 | 10 | 55 | 38 |
| Optical strain | | ○ | ○ | ○ | ○ |
| Sound insulating property | Natural frequency (sound insulating property in low-frequency region) | ○ | ○ | ○ | ○ |
| | STL (sound insulating property in high-frequency region) | ○ | ○ | ○ | ○ |

**[Table 5]**

| | | Example 5 | Example 6 | Example 7 | Example 8 |
|---|---|---|---|---|---|
| Sectional shape of interlayer film | | Fig. 2 | Fig. 2 | Fig. 2 | Fig. 2 |
| Number of layers | | 3 | 3 | 3 | 3 |
| Wedge angle θ of interlayer film as a whole (mrad) | | 0.4 | 0.6 | 0.8 | 1.1 |
| First layer | Content of thermoplastic resin (parts by weight) | 100 | 100 | 100 | 100 |
| | Content of plasticizer (parts by weight) | 38.6 | 38.6 | 38.6 | 38.6 |
| Second layer | Content of thermoplastic resin (parts by weight) | 100 | 100 | 100 | 100 |
| | Content of plasticizer (parts by weight) | 68.8 | 68.8 | 68.8 | 68.8 |
| Third layer | Content of thermoplastic resin (parts by weight) | 100 | 100 | 100 | 100 |
| | Content of plasticizer (parts by weight) | 38.6 | 38.6 | 38.6 | 38.6 |
| Interlayer film | Distance L between one end and other end (mm) | 1000 | 1000 | 1000 | 1000 |
| | Thickness at one end (µm) | 780 | 780 | 780 | 780 |
| | Thickness at other end (µm) | 1180 | 1380 | 1580 | 1880 |
| First layer | Distance L1 between one end and other end (mm) | 1000 | 1000 | 1000 | 1000 |
| | Thickness at one end (µm) | 341 | 341 | 341 | 341 |
| | Thickness at other end (µm) | 236 | 317 | 316 | 320 |
| Second layer | Distance L2 between one end and other end (mm) | 1000 | 1000 | 1000 | 1000 |
| | Thickness at one end (µm) | 105 | 105 | 105 | 105 |
| | Thickness at other end (µm) | 720 | 759 | 964 | 1260 |
| Third layer | Distance L3 between one end and other end (mm) | 1000 | 1000 | 1000 | 1000 |
| | Thickness at one end (µm) | 333 | 333 | 333 | 333 |
| | Thickness at other end (µm) | 224 | 304 | 300 | 301 |
| Absolute value of difference between maximum value of T₁/T and minimum value of T₁/T *1 | | 0.238 | 0.208 | 0.238 | 0.268 |
| Absolute value of difference between maximum value of T₃/T and minimum value of T₃/T *2 | | 0.238 | 0.208 | 0.238 | 0.268 |
| Ten-point average roughness Rz (µm) *3 | | 13 | 20 | 27 | 36 |
| Optical strain | | △ | △ | △ | △ |
| Sound insulating property | Natural frequency (sound insulating property in low-frequency region) | ○ | ○ | ○ | ○ |
| | STL (sound insulating property in high-frequency region) | ○ | ○ | ○ | ○ |

**[Table 6]**

| | | Example 9 | Example 10 | Example 11 |
|---|---|---|---|---|
| Sectional shape of interlayer film | | Fig. 3 | Fig. 4 | Fig. 5 |
| Number of layers | | 3 | 3 | 3 |
| Wedge angle θ of interlayer film as a whole (mrad) | | 0.5 | 0.6 | 0.7 |
| First layer | Content of thermoplastic resin (parts by weight) | 100 | 100 | 100 |
| | Content of plasticizer (parts by weight) | 38.6 | 38.6 | 38.6 |
| Second layer | Content of thermoplastic resin (parts by weight) | 100 | 100 | 100 |
| | Content of plasticizer (parts by weight) | 68.8 | 68.8 | 68.8 |
| Third layer | Content of thermoplastic resin (parts by weight) | 100 | 100 | 100 |
| | Content of plasticizer (parts by weight) | 38.6 | 38.6 | 38.6 |
| Interlayer film | Distance L between one end and other end (mm) | 1000 | 1000 | 1000 |
| | Thickness at one end (µm) | 780 | 780 | 780 |
| | Thickness at other end (µm) | 1280 | 1380 | 1270 |
| First layer | Distance L1 between one end and other end (mm) | 1000 | 1000 | 1000 |
| | Thickness at one end (µm) | 273 | 312 | 312 |
| | Thickness at other end (µm) | 512 | 276 | 210 |
| Second layer | Distance L2 between one end and other end (mm) | 1000 | 1000 | 1000 |
| | Thickness at one end (µm) | 234 | 156 | 109 |
| | Thickness at other end (µm) | 128 | 156 | 140 |
| Third layer | Distance L3 between one end and other end (mm) | 1000 | 1000 | 1000 |
| | Thickness at one end (µm) | 273 | 312 | 359 |
| | Thickness at other end (µm) | 640 | 948 | 1050 |
| Absolute value of difference between maximum value of T₁/T and minimum value of T₁/T *1 | | 0.050 | 0.200 | 0.235 |
| Absolute value of difference between maximum value of T₃/T and minimum value of T₃/T *2 | | 0.150 | 0.287 | 0.367 |
| Ten-point average roughness Rz (µm) *3 | | 11 | 15 | 12 |
| Optical strain | | △ | △ | △ |
| Sound insulating property | Natural frequency (sound insulating property in low-frequency region) | ○ | ○ | ○ |
| | STL (sound insulating property in high-frequency region) | ○ | ○ | ○ |

**[Table 7]**

| | | Example 12 | Example 13 |
|---|---|---|---|
| Sectional shape of interlayer film | | Fig. 6 | Fig. 6 |
| Number of layers | | 3 | 3 |
| Wedge angle θ of interlayer film as a whole (mrad) | | 0.63 | 0.63 |
| First layer | Content of thermoplastic resin (parts by weight) | 100 | 100 |
| | Content of plasticizer (parts by weight) | 38.6 | 35 |
| Second layer | Content of thermoplastic resin (parts by weight) | 100 | 100 |
| | Content of plasticizer (parts by weight) | 68.8 | 80 |
| Third layer | Content of thermoplastic resin (parts by weight) | 100 | 100 |
| | Content of plasticizer (parts by weight) | 38.6 | 35 |
| Interlayer film | Distance L between one end and other end (mm) | 1000 | 1000 |
| | Thickness at one end (µm) | 700 | 700 |
| | Thickness at other end (µm) | 1330 | 1330 |
| First layer | Distance L1 between one end and other end (mm) | 1000 | 1000 |
| | Thickness at one end (µm) | 280 | 280 |
| | Thickness at other end (µm) | 203 | 203 |
| Second layer | Distance L2 between one end and other end (mm) | 1000 | 1000 |
| | Thickness at one end (µm) | 98 | 98 |
| | Thickness at other end (µm) | 108 | 108 |
| Third layer | Distance L3 between one end and other end (mm) | 1000 | 1000 |
| | Thickness at one end (µm) | 322 | 322 |
| | Thickness at other end (µm) | 1003 | 1003 |
| Absolute value of difference between maximum value of T₁/T and minimum value of T₁/T *1 | | 0.247 | 0.247 |
| Absolute value of difference between maximum value of T₃/T and minimum value of T₃/T *2 | | 0.294 | 0.294 |
| Ten-point average roughness Rz (µm) *3 | | 9 | 9 |
| Optical strain | | △ | △ |
| Sound insulating property | Natural frequency (sound insulating property in low-frequency region) | ○ | ○ |
| | STL (sound insulating property in high-frequency region) | ○ | ○ |

### EXPLANATION OF SYMBOLS

1, 1A, 1B, 1C, 1D, 1E: First layer
2, 2A, 2B, 2C, 2D, 2E: Second layer
2a, 2Aa, 2Ba, 2Ca, 2Da, 2Ea: First surface
2b, 2Ab, 2Bb, 2Cb, 2Db, 2Eb: Second surface
3, 3A, 3B, 3C, 3D, 3E: Third layer
11, 11A, 11B, 11C, 11D, 11E: Interlayer film
11a: One end
11b: Other end
11Da: Wedge-like portion
11Db: Rectangular portion
11Ea: First portion where increment of thickness is constant
11Eb: Second portion where increment of thickness is constant
21: First lamination glass member
22: Second lamination glass member
31: Laminated glass
41: Optical strain inspection apparatus
42: Light source unit
43: Slit part
44: Measuring object placing part
45: Projection plane
46: Image inputting part
47: Image processing part
48: Pedestal
49: Evaluation part
421: Light emitting part
422: Optical fiber
423: Irradiation port
481: Pedestal body
482: Arm
A: Optical axis
W: Measuring object

## Claims

1. An interlayer film for laminated glass having a two or more-layer structure,
the interlayer film having one end, and the other end being at an opposite side of the one end,
each layer contained in the interlayer film having one end, and the other end being at an opposite side of the one end,
the one end of the each layer being located at the one end side of the interlayer film in a direction connecting the one end and the other end of the interlayer film, the other end of the each layer being located at the other end side of the interlayer film in the direction connecting the one end and the other end of the interlayer film,
in the interlayer film, a thickness of the other end being larger than a thickness of the one end, and
in at least one layer contained in the interlayer film, a thickness at the other end being smaller than a thickness at the one end.

2. The interlayer film for laminated glass according to claim 1, having a three or more-layer structure, wherein
the interlayer film for laminated glass includes a first layer, a second layer, and a third layer,
the first layer is arranged on a first surface side of the second layer, and
the third layer is arranged on a second surface side opposite to the first surface of the second layer.

3. The interlayer film for laminated glass according to claim 2, wherein in the first layer, a thickness at the other end is smaller than a thickness at the one end.

4. The interlayer film for laminated glass according to claim 3, wherein in the third layer, a thickness at the other end is larger than a thickness at the one end.

5. The interlayer film for laminated glass according to claim 3 or 4, wherein
a ratio of an average thickness of the first layer to an average thickness of the interlayer film is smaller than a ratio of an average thickness of the third layer to an average thickness of the interlayer film, and
a ten-point average roughness Rz of a surface on a side opposite to the second layer of the first layer is 9 um or more.

6. The interlayer film for laminated glass according to claim 3, wherein in the third layer, a thickness at the other end is smaller than a thickness at the one end.

7. The interlayer film for laminated glass according to claim 6, wherein
a ratio of an average thickness of the third layer to an average thickness of the interlayer film is smaller than a ratio of an average thickness of the first layer to an average thickness of the interlayer film, and
a ten-point average roughness Rz of a surface on a side opposite to the second layer of the third layer is 9 um or more.

8. The interlayer film for laminated glass according to any one of claims 2 to 7, wherein
the first layer contains a thermoplastic resin and a plasticizer,
the second layer contains a thermoplastic resin and a plasticizer, and
the third layer contains a thermoplastic resin and a plasticizer.

9. The interlayer film for laminated glass according to claim 8, wherein
a content of the plasticizer in the second layer per 100 parts by weight of the thermoplastic resin in the second layer is larger than a content of the plasticizer in the first layer per 100 parts by weight of the thermoplastic resin in the first layer, and
a content of the plasticizer in the second layer per 100 parts by weight of the thermoplastic resin in the second layer is larger than a content of the plasticizer in the third layer per 100 parts by weight of the thermoplastic resin in the third layer.

10. The interlayer film for laminated glass according to any one of claims 1 to 9, wherein in the interlayer film, a thickness at the one end is 300 um or more.

11. A laminated glass comprising:
a first lamination glass member;
a second lamination glass member; and
the interlayer film for laminated glass according to any one of claims 1 to 10,
the interlayer film for laminated glass being arranged between the first lamination glass member and the second lamination glass member.
